(19) Europäisches Patentamt
European Patent Office
Office européen des brevets

(11) EP 4 306 485 A1

(12) # EUROPEAN PATENT APPLICATION
published in accordance with Art. 153(4) EPC

(43) Date of publication:
**17.01.2024 Bulletin 2024/03**

(21) Application number: **21930310.4**

(22) Date of filing: **18.11.2021**

(51) International Patent Classification (IPC):
***C01B 33/18*** *(2006.01)* ***C09D 201/00*** *(2006.01)*
***C09D 7/62*** *(2018.01)*

(52) Cooperative Patent Classification (CPC):
**C01B 33/18; C09D 7/62; C09D 201/00**

(86) International application number:
**PCT/JP2021/042489**

(87) International publication number:
**WO 2022/190464 (15.09.2022 Gazette 2022/37)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **08.03.2021 JP 2021036222**

(71) Applicant: **Kansai Paint Co., Ltd**
**Amagasaki-shi, Hyogo 661-8555 (JP)**

(72) Inventors:
- **HIRAMATSU, Ryusuke**
  **Hiratsuka-shi, Kanagawa 254-8562 (JP)**
- **WATANABE, Kazuya**
  **Hiratsuka-shi, Kanagawa 254-8562 (JP)**

(74) Representative: **Gill Jennings & Every LLP**
**The Broadgate Tower**
**20 Primrose Street**
**London EC2A 2ES (GB)**

(54) **ACRYLIC RESIN-MODIFIED SILICA PARTICLES, COATING COMPOSITION AND METHOD FOR FORMING MULTILAYER COATING FILM**

(57) The present invention provides acrylic resin-modified silica particles which enable a coating composition to form a coating film that exhibits excellent scratch resistance and excellent adhesion during recoating (recoat adhesion) if used in the coating composition. Acrylic resin-modified silica particles which contain silica particles (A) and an acrylic resin (B) that is bonded to the silica particles (A), wherein the acrylic resin (B) has at least one chain that is selected from among a polyoxyalkylene chain and a polyester chain, and a polysiloxane structure.

EP 4 306 485 A1

## Description

### Technical Field

The present invention relates to acrylic resin-modified silica particles, as well as a coating composition using the acrylic resin-modified silica particles and a method of forming a multilayer coating film.

### Background Art

A paint to be applied onto an object to be coated such as an automobile body is required to have excellent coating film appearance and excellent coating film performance such as scratch resistance. In techniques that have been developed to meet such demands, chemically modified silica particles are compounded in a coating composition to improve scratch resistance and other performances of the resulting coating film.

For example, Patent Document 1 discloses a coating composition containing: silica particles (A) that are surface-modified with a specific hydrolyzable silane compound (a); and a binder component (B).

Patent Document 2 discloses a coating composition containing: (A) a hydroxyl group-containing acrylic resin that is a copolymer of monomer components including (a) 25 to 50 mass% of a hydroxyl group-containing polymerizable unsaturated monomer, (b) 5 to 30 mass% of a polymerizable unsaturated monomer having an alicyclic hydrocarbon group having 6 to 20 carbon atoms, and (c) 20 to 70 mass% of additional polymerizable unsaturated monomer; (B) a polyisocyanate compound including an aliphatic diisocyanate having an isocyanurate trimer content of 30 to 70 mass%, a uretdione dimer content of 3 to 30 mass%, and a content of other trimer and higher multimers of 0 to 67 mass%, based on a total amount of the polyisocyanate compound; and (C) polysiloxane-modified silica particles having an average primary particle size of 1 to 40 nm.

According to these techniques in the related art, excellent performance such as scratch resistance can be imparted to the resulting cured coating film. However, when the characteristics of modified silica are designed to facilitate the formation a coating film surface having excellent scratch resistance, sufficient characteristics regarding adhesion during recoating (recoat adhesion) may not be achieved.

### Citation List

#### Patent Literature

Patent Document 1: JP 2013-249400 A

Patent Document 2: JP 2013-53305 A

### Summary of Invention

#### Technical Problem

The present invention relates to acrylic resin-modified silica particles which, when used in a coating composition, enable the coating composition to form a coating film that exhibits excellent scratch resistance and excellent adhesion during recoating (recoat adhesion). The present invention also relates to a coating composition containing the acrylic resin-modified silica particles and a method of forming a multilayer coating film.

#### Solution to Problem

The present invention includes the following aspects.

[Aspect 1]
Acrylic resin-modified silica particles containing:

silica particles (A); and
an acrylic resin (B) bonded to the silica particles (A),
the acrylic resin (B)
having at least one chain selected from the group consisting of a polyoxyalkylene chain and a polyester chain and

having a polysiloxane structure.

[Aspect 2]
The acrylic resin-modified silica particles according to Aspect 1, wherein the silica particles (A) are colloidal silica having an average primary particle size from 5 to 100 nm.

[Aspect 3]
The acrylic resin-modified silica particles according to Aspect 1 or 2, wherein the acrylic resin-modified silica particles are a reaction product of

silica particles (a1) bonded to an acrylic resin having a first chemically reactive group, and
a compound (a2) having:

a second chemically reactive group reactable with the first chemically reactive group;
at least one chain selected from the group consisting of a polyoxyalkylene chain and a polyester chain; and
a polysiloxane structure.

[Aspect 4]
The acrylic resin-modified silica particles according to Aspect 3,

wherein the silica particles (a1) bonded to an acrylic resin having a first chemically reactive group are a reaction product of
silica particles (a11) having a polymerizable unsaturated group and
a polymerizable unsaturated monomer mixture (a12),
the polymerizable unsaturated monomer mixture (a12) including, as at least a part of components of the polymerizable unsaturated monomer mixture (a12), a polymerizable unsaturated monomer (a121) having a first chemically reactive group.

[Aspect 5]
The acrylic resin-modified silica particles according to Aspect 4, wherein the polymerizable unsaturated monomer (a121) having a first chemically reactive group is at least one type of polymerizable unsaturated monomer selected from the group consisting of a carboxyl group-containing polymerizable unsaturated monomer, an epoxy group-containing polymerizable unsaturated monomer, an isocyanate group-containing polymerizable unsaturated monomer, and an amino group-containing polymerizable unsaturated monomer.

[Aspect 6]
The acrylic resin-modified silica particles according to any one of Aspects 3 to 5, wherein the compound (a2) having: a second chemically reactive group reactable with the first chemically reactive group; at least one chain selected from the group consisting of a polyoxyalkylene chain and a polyester chain; and a polysiloxane structure; has, as the second chemically reactive group, at least one type of chemically reactive group selected from the group consisting of an epoxy group, a carboxyl group, an amino group, a hydroxyl group, and an isocyanate group.

[Aspect 7]
The acrylic resin-modified silica particles according to any one of Aspects 3 to 6, wherein the compound (a2) having: a second chemically reactive group reactable with the first chemically reactive group; at least one chain selected from the group consisting of a polyoxyalkylene chain and a polyester chain; and a polysiloxane structure; has a number-average molecular weight in a range from 200 to 4000.

[Aspect 8]
The acrylic resin-modified silica particles according to any one of Aspects 3 to 7, wherein a mass ratio (a1)/(a2) of the silica particles (a1) bonded to an acrylic resin having a first chemically reactive group to the compound (a2) having: a second chemically reactive group reactable with the first chemically reactive group; at least one chain selected from the group consisting of a polyoxyalkylene chain and a polyester chain; and a polysiloxane structure; is in a range from 90/10 to 98/2.

[Aspect 9]
The acrylic resin-modified silica particles according to any one of Aspects 1 to 8, wherein the acrylic resin (B) having at least one chain selected from the group consisting of a polyoxyalkylene chain and a polyester chain and having a polysiloxane structure is an acrylic resin (B') further having a hydroxyl group.

[Aspect 10]
The acrylic resin-modified silica particles according to Aspect 4,

wherein the acrylic resin (B) having at least one chain selected from the group consisting of a polyoxyalkylene chain and a polyester chain and having a polysiloxane structure is the acrylic resin (B') further having a hydroxyl group, and
an acrylic resin produced from the polymerizable unsaturated monomer mixture (a12) has a hydroxyl value in a range from 60 to 140 mg KOH/g.

[Aspect 11]
The acrylic resin-modified silica particles according to any one of Aspects 1 to 10, wherein a mass ratio of the polysiloxane structure to the at least one chain selected from the group consisting of a polyoxyalkylene chain and a polyester chain, expressed as a mass ratio of (polysiloxane structure)/(at least one chain selected from the group consisting of a polyoxyalkylene chain and a polyester chain), is in a range from 65/35 to 5/95.

[Aspect 12]
A coating composition containing:

the acrylic resin-modified silica particles according to any one of Aspects 1 to 11; and
a binder component.

[Aspect 13]
The coating composition according to Aspect 12, wherein the binder component contains a hydroxyl group-containing resin and a cross-linking agent.

[Aspect 14]
A method of forming a multilayer coating film by sequentially applying at least one layer of a colored basecoat paint and at least one layer of a clearcoat paint to an object to be coated, the method including applying the coating composition according to Aspect 12 or 13 as a clearcoat paint at an uppermost layer.

Advantageous Effects of Invention

Compounding the acrylic resin-modified silica particles according to an embodiment of the present invention in a coating composition enables the coating composition to form a coating film that exhibits excellent scratch resistance and excellent adhesion during recoating (recoat adhesion).

Description of Embodiments

Hereinafter, the present invention will be described in detail.
The acrylic resin-modified silica particles according to an embodiment of the present invention are modified silica particles containing silica particles (A) and an acrylic resin (B) bonded to the silica particles (A), the acrylic resin (B) having at least one chain selected from the group consisting of a polyoxyalkylene chain and a polyester chain and having a polysiloxane structure.

Silica Particles (A)

The silica particles (A) for forming the acrylic resin-modified silica particles according to an embodiment of the present invention can be any silica particles that can form a bond with an acrylic resin. Examples of such silica particles include dry silica, wet silica, silica gel, calcium ion-exchanged silica fine particles, and colloidal silica, and colloidal silica which is silica fine particles having a hydroxyl group and/or an alkoxy group on the particle surface and dispersed in a dispersion medium is preferable.
Examples of the dispersion medium include: water; alcohol-based solvents such as methanol, ethanol, isopropanol, n-propanol, isobutanol, and n-butanol; polyhydric alcohol-based solvents such as ethylene glycol; polyhydric alcohol derivatives such as ethylene glycol monoethyl ether, ethylene glycol monobutyl ether, and propylene glycol monomethyl ether; and ketone-based solvents such as methyl ethyl ketone, methyl isobutyl ketone, and diacetone alcohol. As the dispersion medium, a lower alcohol-based solvent or a lower polyhydric alcohol derivative having 3 or less carbon atoms is preferable. This is because such a dispersion medium is easily removed in a solvent removal process in the production of silica particles (a11) having a polymerizable unsaturated group, which will be described later.

Examples of the colloidal silica include methanol silica sol, IPA-ST, MEK-ST, NBA-ST, XBA-ST, DMAC-ST, PGM-ST, ST-UP, ST-OUP, ST-20, ST-40, ST-C, ST-N, ST-O, ST-50, and ST-OL (all available from Nissan Chemical Industries, Ltd.).

The raw silica particles preferably have an average primary particle size of 5 to 100 nm and more preferably 5 to 50 nm. When the average primary particle size is less than 5 nm, the dispersion being mixed with other organic materials and used may reduce an improvement effect of mechanical properties and the like. When the average primary particle size exceeds 100 nm, transparency may be impaired.

As used herein, the term "average primary particle size" refers to a median diameter (d50) of volume-based particle size distribution, which is measured by a laser diffraction/scattering method. In an embodiment of the present invention, volume-based particle size distribution of the present dispersion is measured using a laser diffraction/scattering particle size distribution analyzer "Microtrac MT3300" (product name, available from Nikkiso Co., Ltd.). At this time, the sample concentration is adjusted to have a transmittance falling within a predetermined range set in the analyzer.

The acrylic resin-modified silica particles according to an embodiment of the present invention have a structure in which the silica particles (A) and the acrylic resin (B) having at least one chain selected from the group consisting of a polyoxyalkylene chain and a polyester chain and a polysiloxane structure are chemically bonded. The process for forming such a structure is not limited.

A specific example of the process for forming a structure in which the silica particles (A) and the acrylic resin (B) having at least one chain selected from the group consisting of a polyoxyalkylene chain and a polyester chain and having a polysiloxane structure are chemically bonded is as follows. First, the silica particles (a11) having a polymerizable unsaturated group are reacted with a polymerizable unsaturated monomer mixture (a12) containing a polymerizable unsaturated monomer (a121) having a first chemically reactive group, resulting in silica particles (a1) bonded to an acrylic resin having a first chemically reactive group. Then, the silica particles (a1) bonded to an acrylic resin having a first chemically reactive group are reacted with a compound (a2) having: a second chemically reactive group; at least one chain selected from the group consisting of a polyoxyalkylene chain and a polyester chain; and a polysiloxane structure; thereby introducing at least one chain selected from the group consisting of a polyoxyalkylene chain and a polyester chain and a polysiloxane structure into the acrylic resin portion of the silica particles (a1) bonded to an acrylic resin having a first chemically reactive group. Here, the first chemically reactive group and the second chemically reactive group can be selected from any combination of chemically reactive groups capable of forming a chemical bond by reaction, and the details will be described later. The polymerizable unsaturated group means an unsaturated group that is radically polymerizable. Examples of such a polymerizable unsaturated group include, but are not limited to, a vinyl group, a (meth)acryloyl group, and a (meth)allyl group. Here, a "(meth)acryloyl group" means an acryloyl group or a methacryloyl group, and a "(meth)allyl group" means an allyl group or a methallyl group.

Aspects of the above-described specific process will be described in further detail.

When the above-described specific process is used, first, the silica particles (a11) having a polymerizable unsaturated group are reacted with the polymerizable unsaturated monomer mixture (a12) containing the polymerizable unsaturated monomer (a121) having a first chemically reactive group, resulting in the silica particles (a1) bonded to an acrylic resin having a first chemically reactive group. The explanation thereof is as follows.

Silica Particles (a11) Having a Polymerizable Unsaturated Group

The silica particles (a11) having a polymerizable unsaturated group may be those produced by, for example, mixing and heating raw silica particles, an organic solvent, and a monomer having a polymerizable unsaturated group and a hydrolyzable silyl group. The resulting silica particles (a11) having a polymerizable unsaturated group may further have a tertiary amine added thereto.

The organic solvent is preferably a hydrophilic organic solvent, and examples thereof include: alcohol-based organic solvents such as methanol, ethanol, isopropanol, n-butanol, and isobutanol; ether-based organic solvents such as dioxane and tetrahydrofuran; glycol ether-based organic solvents such as ethylene glycol monomethyl ether, ethylene glycol monoethyl ether, ethylene glycol mono-n-propyl ether, ethylene glycol monoisopropyl ether, ethylene glycol mono-n-butyl ether, ethylene glycol monoisobutyl ether, ethylene glycol mono-tert-butyl ether, diethylene glycol monomethyl ether, diethylene glycol monoethyl ether, diethylene glycol mono-n-propyl ether, diethylene glycol monoisopropyl ether, diethylene glycol mono-n-butyl ether, diethylene glycol monoisobutyl ether, diethylene glycol mono-tert-butyl ether, propylene glycol monomethyl ether, propylene glycol monoethyl ether, propylene glycol mono-n-propyl ether, propylene glycol monoisopropyl ether, dipropylene glycol monomethyl ether, dipropylene glycol monoethyl ether, dipropylene glycol mono-n-propyl ether, and dipropylene glycol monoisopropyl ether; and ester-based organic solvents such as ethyl acetate, butyl acetate, isobutyl acetate, and 3-methoxybutyl acetate. These can be used alone or in combination of two or more thereof.

As the organic solvent, alcohols and/or glycol ethers are preferable. Among them, alcohols having a boiling point of 64 to 132°C, particularly 82 to 118°C, and glycol ethers having a boiling point of 120 to 208°C, particularly 120 to 192°C are more preferable, and alcohols having 2 to 8 carbon atoms, particularly 3 to 5 carbon atoms, and glycol ethers having 3 to 5 carbon atoms, particularly 3 to 4 carbon atoms are even more preferable.

Examples of the monomer having a polymerizable unsaturated group and a hydrolyzable silyl group include 3-(meth)acryloyloxypropyltrimethoxysilane, 3-(meth)acryloyloxypropyltriethoxysilane, 2-(meth)acryloyloxyethyltrimethoxysilane, 2-(meth)acryloyloxyethyltriethoxysilane, 3-(meth)acryloyloxypropylmethyldimethoxysilane, 2-(meth)acryloyloxyethylmethyldimethoxysilane, vinyltrimethoxysilane, vinyltriethoxysilane, allyltrimethoxysilane, allyltriethoxysilane, and a monomer that has a polymerizable unsaturated group and a hydrolyzable silyl group and that is produced by a reaction between a functional group other than a hydrolyzable silyl group of various silane coupling agents and a functional group other than an unsaturated group of an unsaturated compound.

The silica particles (a11) having a polymerizable unsaturated group are produced by heating and mixing the raw silica particles, the organic solvent, and the monomer having a polymerizable unsaturated group and a hydrolyzable silyl group. More specifically, raw silica particles dispersed in a dispersion medium, an organic solvent, and a monomer having a polymerizable unsaturated group and a hydrolyzable silyl group are mixed, the organic solvent and the dispersion medium for the silica particles (including a lower alcohol generated by hydrolysis of the monomer having a polymerizable unsaturated group and a hydrolyzable silyl group) are azeotropically distilled from the mixture under normal pressure or reduced pressure, and a dehydration condensation reaction is performed under heating while or after the dispersion medium is replaced with the organic solvent, whereby the silica particles (a11) having a polymerizable unsaturated group can be produced.

A concentration of a non-volatile matter of the dispersion liquid during the reaction is preferably in a range of about 5 to about 50 mass%. When the concentration of the non-volatile matter is less than about 5 mass%, that is, when the solvent exceeds about 95 mass%, reaction time may be longer for the reaction between the silica particles and the monomer having a polymerizable unsaturated group and a hydrolyzable silyl group, leading to reduced production efficiency. On the other hand, when the concentration of the non-volatile matter exceeds about 50 mass%, the product may be gelled.

According to these production methods, a silicon atom on a surface of the raw silica particles and a silicon atom of the monomer having a polymerizable unsaturated group and a hydrolyzable silyl group are bonded via an oxygen atom to form a siloxane bond. This results in a dispersion liquid of the silica particles (a11) having a polymerizable unsaturated group in which the silica particles and the monomer having a polymerizable unsaturated group and a hydrolyzable silyl group are chemically bonded.

In producing the silica particles (a11) having a polymerizable unsaturated group, the compounding proportion of the monomer having a polymerizable unsaturated group and a hydrolyzable silyl group is preferably from approximately 0.2 parts by mass to approximately 95 parts by mass, more preferably from approximately 0.5 parts by mass to approximately 50 parts by mass, and still more preferably from approximately 1.0 part by mass to approximately 20 parts by mass, based on 100 parts by mass of the silica particles. When the proportion of the monomer having a polymerizable unsaturated group and a hydrolyzable silyl group is less than about 0.2 parts by mass, the generated silica particles (a) having a polymerizable unsaturated group may have poor stability in the dispersion medium. When the proportion of the monomer having a polymerizable unsaturated group and a hydrolyzable silyl group is more than about 95 parts by mass, the monomer having a polymerizable unsaturated group and a hydrolyzable silyl group may remain unreacted in the reaction with the raw silica particles.

In producing the silica particles (a11) having a polymerizable unsaturated group, an alkoxysilane having an alkyl group of one or more carbons may be reacted with the raw silica particles together with the monomer having a polymerizable unsaturated group and a hydrolyzable silyl group, as necessary. The water resistance of the coating film to be formed may be improved by reacting the alkoxysilane having an alkyl group of one or more carbon atoms. Examples of the alkoxysilane having an alkyl group of one or more carbon atoms include methyltrimethoxysilane, ethyltrimethoxysilane, propyltrimethoxysilane, butyltrimethoxysilane, hexyltrimethoxysilane, decyltrimethoxysilane, and dodecyltrimethoxysilane, and compounds produced by substituting the methoxy group in these exemplified compounds with an ethoxy group (for example, methyltriethoxysilane) are also exemplified.

From the viewpoints of storage stability, scratch resistance, and the like, the silica particles (a11) having a polymerizable unsaturated group may further have a tertiary amine added thereto.

The tertiary amine can be used without particular limitation as long as it is a tertiary amine having a molecular weight of 120 to 380, preferably 130 to 350, more preferably 150 to 300, and having an alkyl group and/or an aryl group at its molecular terminal. The tertiary amine is suitably a tertiary amine in which at least one of the alkyl groups has 3 or more carbon atoms, preferably 4 to 12, more preferably 5 to 10 carbon atoms, from the viewpoints of storage properties, scratch resistance, and the like. Among them, in particular, at least one of the alkyl groups included in the tertiary amine is preferably a linear alkyl group, from the viewpoints of storage properties, scratch resistance, and the like.

Examples of the tertiary amine include: linear tertiary amines such as tripropylamine, tributylamine, tri-n-pentylamine, tri-n-hexylamine, tri-n-heptylamine, and tri-n-octylamine; branched tertiary amines such as branched tritridecylamines such as triisopropylamine, triisobutylamine, and tri-2-ethylhexylamine; tertiary amines having mixed hydrocarbon groups such as dimethyloctylamine, dimethyldodecylamine, dimethyloctadecylamine, hexyldiethylamine, octyldiethylamine, and diethyldodecylamine; alicyclic tertiary amines such as dimethylcyclohexylamine and tricyclohexylamine; and tertiary amines having an aromatic ring substituent such as dimethylbenzylamine and tribenzylamine. These may be used alone or in combination of two or more thereof.

A method known in the art can be used as the method for adding the tertiary amine to the silica particles (a11) having a polymerizable unsaturated group. From the viewpoints of storage stability, scratch resistance, and the like of the resulting coating film when the tertiary amine is compounded in a paint, a suitable amount of the tertiary amine to be used is from 0.1 to 5.0 parts by mass, preferably from 1.5 to 3.0 parts by mass, and more preferably from 1.7 to 2.5 parts by mass, based on 100 parts by mass of the solid content of the silica particles (a11) having a polymerizable unsaturated group.

The silica particles (a11) having a polymerizable unsaturated group, produced as described above, is reacted with the polymerizable unsaturated monomer mixture (a12) containing, as at least a part of components of the polymerizable unsaturated monomer mixture (a12), the polymerizable unsaturated monomer (a121) having a first chemically reactive group to produce the silica particles (a1) bonded to an acrylic resin having a first chemically reactive group. Hereinafter, the polymerizable unsaturated monomer mixture (a12) will be described.

Polymerizable Unsaturated Monomer Mixture (a12)

The polymerizable unsaturated monomer mixture (a12) to be reacted with the silica particles (a11) having a polymerizable unsaturated group contains, as at least a part of components of the polymerizable unsaturated monomer mixture (a12), the polymerizable unsaturated monomer (a121) having a first chemically reactive group.

The polymerizable unsaturated monomer (a121) having a first chemically reactive group is a polymerizable unsaturated monomer having a chemically reactive group reactable with the second chemically reactive group of the compound (a2) to be described later.

Examples of a combination of the first chemically reactive group in the polymerizable unsaturated monomer (a121) and the second chemically reactive group in the compound (a2), expressed as a combination of first chemically reactive group/second chemically reactive group, include epoxy group/carboxyl group, carboxyl group/epoxy group, hydroxyl group/isocyanate group, isocyanate group/hydroxyl group, hydroxyl group/alkoxysilyl group, alkoxysilyl group/hydroxyl group, amino group/isocyanate group, isocyanate group/amino group, epoxy group/amino group, and amino group/epoxy group. Among them, a combination of epoxy group/carboxyl group, carboxyl group/epoxy group, hydroxyl group/isocyanate group, or epoxy group/amino group is preferable, and a combination of carboxyl group/epoxy group is particularly preferable.

More specifically, the combination of the polymerizable unsaturated monomer (a121) having a first chemically reactive group and the compound (a2) having a second chemically reactive group is preferably any one of the following combinations, and particularly preferably the combination (i):

(i) the polymerizable unsaturated monomer (a121) having a first chemically reactive group is a carboxyl group-containing polymerizable unsaturated monomer, and the compound (a2) having a second chemically reactive group is an epoxy group-containing compound;
(ii) the polymerizable unsaturated monomer (a121) having a first chemically reactive group is an epoxy group-containing polymerizable unsaturated monomer, and the compound (a2) having a second chemically reactive group is a carboxyl group-containing compound;
(iii) the polymerizable unsaturated monomer (a121) having a first chemically reactive group is a hydroxyl group-containing polymerizable unsaturated monomer, and the compound (a2) having a second chemically reactive group is an isocyanate group-containing compound.

Examples of the epoxy group-containing polymerizable unsaturated monomer include glycidyl(meth)acrylate, β-methylglycidyl (meth)acrylate, 3,4-epoxycyclohexyl methyl(meth)acrylate, 3,4-epoxycyclohexyl ethyl(meth)acrylate, 3,4-epoxycyclohexylpropyl (meth)acrylate, and allyl glycidyl ether. These examples can be used alone or in combination of two or more. Among them, glycidyl methacrylate can be preferably used. Note that, in the present specification, "(meth)acrylate" means "acrylate or methacrylate". "(Meth)acrylic acid" means "acrylic acid or methacrylic acid". Furthermore, "(meth)acrylamide" means "acrylamide or methacrylamide".

Examples of the carboxyl group-containing polymerizable unsaturated monomer include (meth)acrylic acid, maleic acid, crotonic acid, itaconic acid, and β-carboxyethyl acrylate. These examples can be used alone or in combination of two or more. Among them, acrylic acid and/or methacrylic acid can be preferably used.

Examples of the hydroxyl group-containing polymerizable unsaturated monomer include: monoesterified products of (meth)acrylic acid and a dihydric alcohol having from 2 to 8 carbons, such as 2-hydroxyethyl (meth)acrylate, 2-hydroxypropyl (meth)acrylate, 3-hydroxypropyl (meth)acrylate, and 4-hydroxybutyl (meth)acrylate; and ε-caprolactone modified products of the monoesterified products of (meth)acrylic acid and a dihydric alcohol having from 2 to 8 carbons. These examples can be used alone or in combination of two or more. Among them, 2-hydroxyethyl acrylate and/or 2-hydroxyethyl methacrylate can be preferably used.

Examples of the isocyanate group-containing polymerizable unsaturated monomer include 2-isocyanatoethyl (meth)acrylate and m-isopropenyl-α,α-dimethylbenzyl isocyanate. Examples of commercially available products of the isocyanate group-containing polymerizable unsaturated monomer include "Karenz MOI", "Karenz AOI", and "Karenz MOI-EG" (all of which are available from Showa Denko K.K.). The isocyanate group-containing polymerizable unsaturated monomers described above may be used alone or in combination of two or more. Among them, 2-isocyanatoethyl acrylate and/or 2-isocyanatoethyl methacrylate can be preferably used.

Examples of the amino group-containing polymerizable unsaturated monomer include dimethylaminoethyl acrylate, dimethylaminoethyl methacrylate, diethylaminoethyl acrylate, diethylaminoethyl methacrylate, dimethylaminopropyl acrylamide, and dimethylaminopropyl methacrylamide.

Examples of the alkoxysilyl group-containing polymerizable unsaturated monomer include vinyltrimethoxysilane, vinyltriethoxysilane, vinyltripropoxysilane, vinyltributoxysilane, (meth)acryloyloxymethyl trimethoxysilane, (meth)acryloyloxyethyl trimethoxysilane, γ-(meth)acryloyloxypropyl trimethoxysilane, γ-(meth)acryloyloxypropyl triethoxysilane, (meth)acryloyloxyethyl triethoxysilane, (meth)acryloyloxypropyl tributoxysilane, vinyltris-β-methoxyethoxysilane, divinyl methoxysilane, and divinyldi-β-methoxyethoxysilane.

The polymerizable unsaturated monomer mixture (a12) may contain an additional polymerizable unsaturated monomer besides the polymerizable unsaturated monomer (a121) having a first chemically reactive group. Examples of the additional polymerizable unsaturated monomer include: C1-C24 alkyl or cycloalkyl esters of (meth)acrylic acid, such as methyl (meth)acrylate, ethyl (meth)acrylate, butyl (meth)acrylate, 2-ethylhexyl (meth)acrylate, lauryl (meth)acrylate, and cyclohexyl (meth)acrylate; C1-C16 alkoxyalkyl esters of (meth)acrylic acid, such as methoxybutyl acrylate, methoxybutyl methacrylate, methoxyethyl acrylate, methoxyethyl methacrylate, ethoxybutyl acrylate, ethoxybutyl methacrylate, and phenoxyethyl (meth)acrylate; (meth)acrylate having a polyoxyalkylene chain; (meth)acrylate having a polyester chain; (meth)acrylate having a polysiloxane structure; aromatic unsaturated monomers such as styrene, vinyltoluene, α-methylstyrene, N-vinylpyrrolidone, and vinylpyridine; olefins such as ethylene, propylene, butylene, and pentene; diene compounds such as butadiene, isoprene, and chloroprene; adducts of cyclohexenyl (meth)acrylate, dicyclopentenyl (meth)acrylate, dicyclopentenyloxyethyl (meth)acrylate, isobornyl (meth)acrylate, benzyl (meth)acrylate, N-butoxy (meth)acrylamide, glycidyl (meth)acrylate and amines; vinyl propionate, vinyl acetate, vinyl pivalate, and VeoVa monomers (products by Shell Chemicals Japan Ltd.).

The epoxy group-containing polymerizable unsaturated monomers, the carboxyl group-containing polymerizable unsaturated monomers, the hydroxyl group-containing polymerizable unsaturated monomers, and the isocyanate group-containing polymerizable unsaturated monomers listed as examples in the description of the polymerizable unsaturated monomer (a121) having a first chemically reactive group can be used as the additional polymerizable unsaturated monomer as long as they have no reactivity with the second chemically reactive group contained in the compound (a2) to be described later.

In addition, in the present invention, the acrylic resin (B) having at least one chain selected from the group consisting of a polyoxyalkylene chain and a polyester chain and having a polysiloxane structure is preferably an acrylic resin (B') further having a hydroxyl group from the viewpoints of scratch resistance, recoat adhesion, and the like of the resulting coating film.

The acrylic resin (B') having a hydroxyl group can be produced, for example, by incorporating a hydroxyl group-containing polymerizable unsaturated monomer as a constituent component of the polymerizable unsaturated monomer mixture (a12). The hydroxyl group-containing polymerizable unsaturated monomer may be one listed as an example in the description of the polymerizable unsaturated monomer (a121) having a first chemically reactive group. From the viewpoints of scratch resistance, recoat adhesion, and the like of the resulting coating film, the hydroxyl value of the acrylic resin produced from the polymerizable unsaturated monomer mixture (a12) is preferably in a range from 60 to 140, more preferably in a range from 65 to 130, and further particularly preferably in a range from 70 to 120.

When the polymerizable unsaturated monomer mixture (a12) contains the additional polymerizable unsaturated monomer besides the polymerizable unsaturated monomer (a121) having a first chemically reactive group, the content of the additional polymerizable unsaturated monomer is preferably 99.5 mass% or less, more preferably 99 mass% or less, based on a total mass of the polymerizable unsaturated monomer mixture (a12).

Formation of Silica Particles (a1) Bonded to an Acrylic Resin Having a First Chemically Reactive Group

The silica particles (a1) bonded to an acrylic resin having a first chemically reactive group can be produced by polymerizing the silica particles (a11) having a polymerizable unsaturated group and the polymerizable unsaturated monomer mixture (a12) in the presence of a solvent. The polymerization method is not particularly limited, and a polymerization method known per se can be used. Among them, a solution polymerization method in which polymerization is performed in an organic solvent in the presence of a catalyst, a polymerization initiator, and the like as appropriate can be suitably used.

Examples of the organic solvent used in the solution polymerization method include: aromatic compounds such as benzene, toluene, xylene, ethylbenzene, "Swasol 1000" and "Swasol 1500" (trade names, available from Maruzen Petrochemical Co., Ltd., high boiling point petroleum-based solvents); hydrocarbon-based solvents such as pentane, hexane, heptane, octane, cyclohexane, cycloheptane, and mineral spirit; halogenated hydrocarbons such as trichloroethylene and tetrachloroethylene; ester-based solvents such as ethyl acetate, n-butyl acetate, isobutyl acetate, ethyl propionate, methylcellosolve acetate, butylcarbitol acetate, ethylene glycol monomethyl ether acetate, diethylene glycol monobutyl ether acetate, and ethyl 3-ethoxypropionate; ketone-based solvents such as methyl ethyl ketone, methyl isobutyl ketone, diisobutyl ketone, and cyclohexanone; alcohol-based solvents such as methanol, ethanol, isopropanol, n-butanol, sec-butanol, isobutanol, ethylene glycol, ethylene glycol monomethyl ether, ethylene glycol monoethyl ether, and ethylene glycol monobutyl ether; ether-based solvents such as n-butyl ether, dioxane, dibutyl ether, and ethylene glycol dimethyl ether; and dimethylsulfoxide, dimethylformamide, N-methylpyrrolidone, or water. These organic solvents can be used alone or in combination of two or more. Among them, an aromatic solvent and an ester-based solvent are preferable, and an ester-based solvent is more preferable, from the viewpoint of appearance of the resulting coating film.

Examples of the polymerization initiator that can be used in the polymerization include, but are not limited to, radical polymerization initiators known per se, such as: peroxide-based polymerization initiators such as benzoyl peroxide, paramenthane hydroperoxide, cumene hydroperoxide, lauroyl peroxide, cyclohexanone peroxide, 3,3,5-trimethylcyclohexanone peroxide, methylcyclohexanone peroxide, tert-butyl peroxypivalate, 1,1'-bis(tert-butylperoxy)cyclohexane, 1,1-bis(tert-butylperoxy)-3,3,5-trimethylcyclohexane, n-butyl-4,4-bis(tert-butylperoxy)valerate, 2,2'-di(tert-butylperoxy)butane, tert-butylhydroxyperoxide, 2,5-dimethylhexane-2,5-dihydroperoxide, di-tert-butyl peroxide, di-n-propylperoxydicarbonate, tert-hexylperoxy-2-ethylhexanoate, 1,3-bis(tert-butylperoxy-m-isopropyl)benzene, 2,5-dimethyl-2,5-di(tert-butylperoxy)hexane, diisopropylbenzene peroxide, tert-butylcumylperoxide, decanoylperoxide, lauroylperoxide, benzoylperoxide, 2,4-dichlorobenzoylperoxide, bis(tert-butylcyclohexyl) peroxydicarbonate, tert-butyl peroxybenzoate, 2,5-dimethyl-2,5-di(benzoylperoxy)hexane, and hydrogen peroxide; azo-based polymerization initiators such as 1,1-azobis(cyclohexane-1-carbonitrile), azocumene, 2,2'-azobis-(2,4-dimethylvaleronitrile), 2,2'-azobis-(2-methylbutyronitrile), 2,2'-azobisisobutyronitrile, 2,2'-azobis-(4-methoxy-2,4-dimethylvaleronitrile, dimethyl 2,2'-azobis(2-methylpropionate), 2,2'-di(2-hydroxyethyl)azobisisobutylonitrile, 4,4'-azobis(4-cyanovaleric acid), 2-(tert-butylazo)-2-cyanopropane, 2,2'-azobis(2,4,4-trimethylpentane), 2,2'-azobis(2-methylpropane), dimethyl 2,2'-azobis(2-methylpropionate), and 2,2'-azobis-(N-butyl-2-methylpropionamide); persulfate-based initiators such as potassium persulfate and sodium persulfate; and redox initiators including a peroxide and a reducing agent.

An amount of the radical polymerization initiator used is preferably from 0.1 to 20 parts by mass, particularly preferably from 1 to 10 parts by mass, based on 100 parts by mass of the polymerizable unsaturated monomer mixture (a12). When the amount of the radical polymerization initiator is less than 0.1 parts by mass, the proportion of an unreacted polymerizable unsaturated monomer that does not react with the silica particles (a11) having a polymerizable unsaturated group may increase. When the amount of the radical polymerization initiator is greater than 20 parts by mass, aggregation of silica particles may occur due to polymerization of the silica particles bonded to acrylic resin.

When the reaction between the silica particles (a11) having a polymerizable unsaturated group and the polymerizable unsaturated monomer mixture (a12) is carried out in a solvent, a total mass concentration of the silica particles (a11) having a polymerizable unsaturated group and the polymerizable unsaturated monomer mixture (a12) is preferably in a range from approximately 10 mass% to approximately 90 mass%, particularly preferably from approximately 20 mass% to approximately 70 mass%. When the total mass concentration is less than about 10 mass%, the reaction time may be longer, leading to reduced production efficiency. When the total mass concentration is higher than about 90 mass%, the viscosity of the reaction system may become high, making stirring difficult.

From the viewpoint of suppressing inhibition of the polymerization reaction by oxygen to improve the reaction rate, the reaction is preferably performed with the gas phase in the reaction vessel replaced with an inert gas and while stirring. The reaction temperature and reaction time can be appropriately selected depending on the type and the like of the polymerizable unsaturated monomer mixture (a12). The reaction temperature is preferably in a range from approximately 0°C to approximately 250°C, and the reaction time is preferably in a range from 1 hour to 72 hours. The reaction can usually be carried out under normal pressure, but can also be carried out under increased pressure or reduced pressure.

A polymerization rate of the polymerizable unsaturated monomer mixture (a12) in the above reaction is preferably approximately 90% or greater, particularly preferably approximately 95% or greater. When the polymerization rate of the polymerizable unsaturated monomer mixture (a12) is less than approximately 90%, the coating film performance such as scratch resistance may be inferior. An amount of the unreacted polymerizable unsaturated monomer mixture (a12) can be reduced by extending the reaction time. When the amount of the unreacted polymerizable unsaturated monomer mixture (a12) is small, it can be reduced by further carrying out the polymerization reaction with a radical polymerization initiator added.

Compound (a2) Having a Second Chemically Reactive Group, at Least One Chain Selected from the Group Consisting of a Polyoxyalkylene Chain and a Polyester Chain, and a Polysiloxane Structure

The acrylic resin-modified silica particles according to an embodiment of the present invention can be produced by reacting the silica particles (a1) bonded to an acrylic resin having a first chemically reactive group with the compound (a2) having: a second chemically reactive group; at least one chain selected from the group consisting of a polyoxyalkylene chain and a polyester chain; and a polysiloxane structure. Examples of the compound (a2) to be reacted with the silica particles (a1) include a modified silicone compound modified with a chemically reactive group and at least one chain selected from the group consisting of a polyoxyalkylene chain and a polyester chain. Here, the chemically reactive group is selected from chemically reactive groups (second chemically reactive groups) having reactivity with the first chemically reactive group.

Examples of such a modified silicone compound include modified silicone compounds produced by introducing a chemically reactive group (second chemically reactive group) and at least one chain selected from the group consisting of a polyoxyalkylene chain and a polyester chain into a side chain and/or a terminal of a compound having a polysiloxane structure such as dimethylpolysiloxane.

Examples of the compound having a polysiloxane structure include dialkyl silicone, alkylaryl silicone, and diaryl silicone. The alkyl group in a structural unit of these silicones is preferably an alkyl group having from 1 to 6 carbons. Examples of the aryl group include a phenyl group and a naphthyl group, and the aryl group is preferably a phenyl group. An example of dialkyl silicone includes dimethyl silicone, an example of alkylaryl silicone includes methylphenyl silicone, and an example of diaryl silicone includes diphenyl silicone.

Examples of the chemically reactive group (second chemically reactive group) introduced into a side chain and/or a terminal of the compound having a polysiloxane structure include the chemically reactive groups listed as examples in the description of the polymerizable unsaturated monomer (a121) having a first chemically reactive group, which are, when expressed as a combination of first chemically reactive group/second chemically reactive group, epoxy group/carboxyl group, carboxyl group/epoxy group, hydroxyl group/isocyanate group, isocyanate group/hydroxyl group, hydroxyl group/alkoxysilyl group, alkoxysilyl group/hydroxyl group, amino group/isocyanate group, isocyanate group/amino group, epoxy group/amino group, and amino group/epoxy group. Among them, a combination of epoxy group/carboxyl group, carboxyl group/epoxy group, hydroxyl group/isocyanate group, or epoxy group/amino group is preferable, and a combination of carboxyl group/epoxy group is particularly preferable.

Examples of the polyoxyalkylene chain introduced into a side chain and/or a terminal of the compound having a polysiloxane structure include polyoxyalkylene chains containing an alkylene structure having from 2 to 4 carbons, such as a polyoxyethylene chain, a polyoxypropylene chain, a polyoxybutylene chain, and a polyoxyethylene polyoxypropylene chain. Among them, a polyoxyethylene chain, a polyoxypropylene chain, and a polyoxyethylene polyoxypropylene chain are preferable, and a polyoxyethylene polyoxypropylene chain is particularly preferable. Here, the polyoxyethylene polyoxypropylene chain is an organic residue formed by a copolymer structure of an oxyethylene unit and an oxypropylene unit, and the arrangement of the oxyethylene unit and the oxypropylene unit may be block or random. Such a polyoxyalkylene chain preferably has a molecular weight in a range from 100 to 3000, more preferably in a range from 200 to 2500. From the viewpoint of recoat adhesion and the like of the resulting coating film, when the polyoxyalkylene chain is a polyoxyethylene polyoxypropylene chain, a ratio of the oxyethylene unit to the oxypropylene unit is preferably in a range from 100:0 to 50:50, more preferably in a range from 100:0 to 60:40, and further particularly preferably in a range from 100:0 to 70:30 in terms of mass ratio.

The polyester chain introduced into a side chain and/or a terminal of the compound having a polysiloxane structure may be, for example, a polyester chain containing a polyol and a polycarboxylic acid (including an acid anhydride thereof and a lower alkyl ester thereof) as constituent elements. The polyol may be a diol and a trivalent or higher polyol. The polycarboxylic acid may be a dicarboxylic acid and a trivalent or higher polycarboxylic acid.

From the viewpoint of scratch resistance and the like of the resulting coating film, the compound (a2) having: a second chemically reactive group; at least one chain selected from the group consisting of a polyoxyalkylene chain and a polyester chain; and a polysiloxane structure; preferably has a number-average molecular weight in a range from 200 to 4000, more preferably in a range from 400 to 3000, and further particularly preferably in a range from 500 to 2500.

Note that in the present specification, number-average molecular weight and weight-average molecular weight are values calculated from a chromatogram measured by a gel permeation chromatograph calibrated with the molecular weight of standard polystyrene. For the gel permeation chromatograph, "HLC8120 GPC" (available from Tosoh Corporation) is used. The gel permeation chromatography is performed using four columns "TSKgel G-4000HXL", "TSKgel G-3000HXL", "TSKgel G-2500HXL", and "TSKgel G-2000HXL" (all available from Tosoh Corporation, trade names) under conditions of a mobile phase of tetrahydrofuran, a measurement temperature of 40°C, a flow rate of 1 mL/min, and a detector of RI.

In the compound (a2) having: a second chemically reactive group; at least one chain selected from the group consisting of a polyoxyalkylene chain and a polyester chain; and a polysiloxane structure; a ratio of the polysiloxane structure to the at least one chain selected from the group consisting of a polyoxyalkylene chain and a polyester chain is, in mass ratio and expressed as (polysiloxane structure):(at least one chain selected from the group consisting of a polyoxyalkylene chain and a polyester chain), preferably in a range from 65:35 to 5:95, more preferably in a range from 55:45 to 10:90, and further particularly preferably in a range from 45:55 to 15:85.

The ratio of the polysiloxane structure to the at least one chain selected from the group consisting of a polyoxyalkylene chain and a polyester chain can be determined using a proton NMR measurement. Specifically, the ratio was quantified by calculating from an integrated value of peaks (from 0.0 to 0.1 ppm, from 0.4 to 0.6 ppm) of protons of alkyl groups of the polysiloxane structure and an integrated value of peaks (from 1.1 to 1.2 ppm, from 3.5 to 3.7 ppm) of protons of the oxyalkylene chain in a proton NMR measurement [measuring instrument: Biospin Avance 600 (product name) available from Bruker; measurement solvent: chloroform-d; observation frequency: 150 MHz; number of times of integration: 32 times].

Regarding compounds suitably used as the compound (a2) having: a second chemically reactive group; at least one chain selected from the group consisting of a polyoxyalkylene chain and a polyester chain; and a polysiloxane structure, preferable examples include dialkyl silicones having an epoxy group, a carboxyl group, a hydroxyl group, or an amino group as the second chemically reactive group and having a polyoxyalkylene chain having from 2 to 4 carbons as the polyoxyalkylene chain at a side chain or a terminal, and particularly preferable examples include dimethyl silicones having an epoxy group or an amino group as the second chemically reactive group and having a polyoxyethylene-oxypropylene chain as the polyoxyalkylene chain at a side chain or a terminal. A commercially available product can also be used as the compound (a2) having: a second chemically reactive group; at least one chain selected from the group consisting of a polyoxyalkylene chain and a polyester chain; and a polysiloxane structure. Examples of such a commercially available product include X-22-4741, KF-1002, and X-22-3939A (all of which are available from Shin-Etsu Silicones), DOWSIL BY16-760, DOWSII, BY16-876, DOWSII, FZ-3736 FLUID, DOWSII, SF8421 FLUID, and DOWSII, FZ-3789 (all of which are available from Dow Toray Co.,Ltd.).

The acrylic resin-modified silica particles according to an embodiment of the present invention can be produced by reacting the silica particles (a1) bonded to an acrylic resin having a first chemically reactive group with the compound (a2) having: a second chemically reactive group; at least one chain selected from the group consisting of a polyoxyalkylene chain and a polyester chain; and a polysiloxane structure.

The reaction between the silica particles (a1) and the compound (a2) can be carried out, for example, by mixing and heating the silica particles (a1) and the compound (a2) in an organic solvent.

Examples of the organic solvent include propylene glycol monomethyl ether, propylene glycol monoethyl ether, and propylene glycol monopropyl ether, and among them. propylene glycol monomethyl ether is preferable.

The reaction conditions between the silica particles (a1) and the compound (a2) can be appropriately determined depending on the combination of the first chemically reactive group/the second chemically reactive group, and the like. In general, for example, heating and mixing can be performed at a temperature from 80 to 150°C for from 1 to 6 hours. Regarding the ratio of the silica particles (a1) to the compound (a2) at the time of reaction, a mass ratio of the silica particles (a1) to the compound (a2) is preferably set to a range from 90:10 to 98:2, more preferably a range from 93:7 to 97:3, from the viewpoints of scratch resistance, transparency, and the like of the resulting coating film.

The acrylic resin-modified silica particles according to an embodiment of the present invention produced in this way contain the silica particles (A) and the acrylic resin (B) bonded to the silica particles (A), and the acrylic resin (B) is modified silica particles having at least one chain selected from the group consisting of a polyoxyalkylene chain and a polyester chain and having a polysiloxane structure.

Another specific example of the process for forming a structure in which the silica particles (A) and the acrylic resin (B) having at least one chain selected from the group consisting of a polyoxyalkylene chain and a polyester chain and having a polysiloxane structure are chemically bonded is a method of reacting the silica particles (a11) having a polymerizable unsaturated group with a polymerizable unsaturated monomer mixture (a13), the polymerizable unsaturated monomer mixture (a13) containing a compound (a131) having a polymerizable unsaturated group and further having a polysiloxane structure and containing a polymerizable unsaturated monomer (a132) having a polymerizable unsaturated group and further having at least one chain selected from the group consisting of a polyoxyalkylene chain and a polyester chain.

Examples of the compound (a131) having a polymerizable unsaturated group and further having a polysiloxane structure include a modified silicone compound modified with a polymerizable unsaturated group. Examples of such a modified silicone compound include modified silicone compounds produced by introducing a polymerizable unsaturated group into a side chain and/or a terminal of a compound having a polysiloxane structure such as dimethylpolysiloxane. The polymerizable unsaturated group introduced into a side chain and/or a terminal of the compound having a polysiloxane structure is a group capable of radical polymerization with the polymerizable unsaturated group of the silica particles (a11) having a polymerizable unsaturated group. Examples of the polymerizable unsaturated group introduced into a side chain and/or a terminal of the compound having a polysiloxane structure include, but are not limited to, a vinyl group, a (meth)acryloyl group, and a (meth)allyl group.

A commercially available product can also be used as the compound (a131) having a polymerizable unsaturated group and further having a polysiloxane structure. Examples of such a commercially available product include "X-22-174ASX" (product name, available from Shin-Etsu Silicones, single-end type methacryl-modified dimethyl silicone), "KF-2012" (product name, available from Shin-Etsu Silicones, single-end type methacryl-modified dimethyl silicone), "X-22-174BX" (product name, available from Shin-Etsu Silicones, single-end type methacryl-modified dimethyl silicone), "X-22-2426" (product name, available from Shin-Etsu Silicones, single-end type methacryl-modified dimethyl silicone), "X-22-2404"(product name, available from Shin-Etsu Silicones, single-end type methacryl-modified dimethyl silicone), "Silaplane FM-0711" (product name, available from JNC Corporation, single-end type methacryl-modified dimethyl silicone), "Silaplane FM-0721" (product name, available from JNC Corporation, single-end type methacryl-modified dimethyl silicone), "Silaplane FM-0725" (product name, available from JNC Corporation, single-end type methacryl-modified dimethyl silicone), "BYK-UV 3500" (product name, available from BYK, polyether modified polydimethylsiloxane having an acryl functional group), and "BYK-UV 3570" (product name, available from BYK, polyester modified polydimethylsiloxane having an acryl functional group).

In the polymerizable unsaturated monomer (a132) having a polymerizable unsaturated group and further having at least one chain selected from the group consisting of a polyoxyalkylene chain and a polyester chain, the polyoxyalkylene chain and the polyester chain can be selected from the polyoxyalkylene chains and the polyester chains described in the section of "Compound (a2) Having a Second Chemically Reactive Group, at Least One Chain Selected from the Group Consisting of a Polyoxyalkylene Chain and a Polyester Chain, and Having a Polysiloxane Structure" above. The polymerizable unsaturated group is capable of radical polymerization with the polymerizable unsaturated group of the silica particles (a11) having a polymerizable unsaturated group. Examples of the polymerizable unsaturated group include, but are not limited to, a vinyl group, a (meth)acryloyl group, and a (meth)allyl group.

A commercially available product can also be used as the polymerizable unsaturated monomer (a132) having a polymerizable unsaturated group and further having at least one chain selected from the group consisting of a polyoxyalkylene chain and a polyester chain. Examples of such a commercially available product include "Light Ester 130MA", "Light Ester 041MA", "Light Acrylate EC-A", "Light Acrylate MTG-A", "Light Acrylate 130A", "Light Acrylate DPM-A", and "Light Acrylate P-200A" , "Light Acrylate EHDG-AT" (all of which are available from Kyoeisha Chemical Co., Ltd.), "AM-30G", "AM-90G", "AM-130G", "AM-230G", "AM-30PG", "M-20G", "M-40G", "M-90G", "M-130G", "M-230G", "M-450G", and "M-30PG" (all of which are available from Shin-Nakamura Chemical Co., Ltd.), "Blemmer PME-100", "Blemmer PME-200", "Blemmer PME-400", "Blemmer PME-1000", "Blemmer PME-4000", "Blemmer AME-400", "Blemmer PE-90", "Blemmer PE-200", "Blemmer PE-350", "Blemmer PP-1000", "Blemmer PP-500", "Blemmer PP-800", "Blemmer 50PEP-300", "Blemmer 55PET-800", "Blemmer 10PPB-500B", "Blemmer AE-200", "Blemmer AE-400", "Blemmer AP-200", "Blemmer AP-400", and "Blemmer AP-550" (all of which are available from NOF Corporation), "BYK-UV 3500", and "BYK-UV 3570" (all of which are available from BYK).

The polymerizable unsaturated monomer mixture (a13) may contain an additional polymerizable unsaturated monomer besides the compound (a131) and the polymerizable monomer (a132). Examples of the additional polymerizable unsaturated monomer besides the compound (a131) and the polymerizable monomer (a132) include the polymerizable unsaturated monomers listed as examples of the "additional polymerizable unsaturated monomer besides the polymerizable unsaturated monomer (a121) having a first chemically reactive group" described in the section of "Polymerizable Unsaturated Monomer Mixture (a12)" above. In addition, in the present method, the epoxy group-containing polymerizable unsaturated monomers, the carboxyl group-containing polymerizable unsaturated monomers, the hydroxyl group-containing polymerizable unsaturated monomers, and the isocyanate group-containing polymerizable unsaturated monomers listed as examples in the description of the polymerizable unsaturated monomer (a121) having a first chemically reactive group can be used as the additional polymerizable unsaturated monomer besides the compound (a131) and the polymerizable monomer (a132). When the polymerizable unsaturated monomer mixture (a13) contains the additional polymerizable unsaturated monomer besides the compound (a131) and the polymerizable monomer (a132), the content of the additional polymerizable unsaturated monomer is preferably 99 mass% or less, more preferably 97 mass% or less, based on a total mass of the polymerizable unsaturated monomer mixture (a13).

Reacting the silica particles (a11) having a polymerizable unsaturated group with the above-described polymerizable unsaturated monomer mixture (a13) can yield the acrylic resin-modified silica particles containing the silica particles (A) and the acrylic resin (B) bonded to the silica particles (A), the acrylic resin (B) having at least one chain selected from the group consisting of a polyoxyalkylene chain and a polyester chain and having a polysiloxane structure.

The reaction between the silica particles (a11) having a polymerizable unsaturated group and the polymerizable unsaturated monomer mixture (a13) can be achieved by polymerization reaction in the presence of a solvent. The polymerization method is not particularly limited, and a polymerization method known per se can be used. Among them, a solution polymerization method in which polymerization is performed in an organic solvent in the presence of a catalyst, a polymerization initiator, and the like as appropriate can be suitably used. In addition, the organic solvent, polymerization initiator, and the like used in the polymerization reaction are not limited, and for example, the organic solvents, polymerization initiators, and the like listed as examples related to the polymerization reaction between the silica particles (a11) having a polymerizable unsaturated group and the polymerizable unsaturated monomer mixture (a12) can be used.

When the acrylic resin (B) having at least one chain selected from the group consisting of a polyoxyalkylene chain and a polyester chain and having a polysiloxane structure is the acrylic resin (B') further having a hydroxyl group, the acrylic resin (B') having a hydroxyl group can be produced, for example, by incorporating a hydroxyl group-containing polymerizable unsaturated monomer as a constituent component of the polymerizable unsaturated monomer mixture (a13). The hydroxyl group-containing polymerizable unsaturated monomer may be one listed as an example in the description of the polymerizable unsaturated monomer (a121) having a first chemically reactive group. From the viewpoints of scratch resistance, recoat adhesion, and the like of the resulting coating film, the hydroxyl value of the acrylic resin produced from the polymerizable unsaturated monomer mixture (a13) is preferably in a range from 60 to 140, more preferably in a range from 65 to 130, and further particularly preferably in a range from 70 to 120.

When the acrylic resin-modified silica particles according to an embodiment of the present invention are compounded in a coating composition, a coating film having excellent scratch resistance and excellent adhesion during recoating (recoat adhesion) can be formed. The reason why the acrylic resin-modified silica particles according to an embodiment of the present invention exhibit such excellent effects is not exactly clear, but it is inferred as follows. The acrylic resin-modified silica particles according to an embodiment of the present invention have a polysiloxane structure, and as such the particles segregate on the coating film surface, giving excellent scratch resistance to the resulting coating film. Meanwhile, the acrylic resin-modified silica particles according to an embodiment of the present invention have at least one chain selected from the group consisting of a polyoxyalkylene chain and a polyester chain, and as such wettability during recoating is improved, giving excellent recoat adhesion to the resulting coating film.

Furthermore, when the acrylic resin-modified silica particles according to an embodiment of the present invention are compounded in a coating composition, a coating film having excellent transparency can be formed. The reason why the acrylic resin-modified silica particles according to an embodiment of the present invention exhibit such excellent effects is not exactly clear, but it is inferred as follows. The acrylic resin-modified silica particles contain an acrylic resin, and as such the affinity between the acrylic resin-modified silica particles and the binder component contained in the coating composition is relatively high, giving excellent transparency to the resulting coating film.

## Coating Composition

The present invention also provides a coating composition containing the acrylic resin-modified silica particles according to an embodiment of the present invention and a binder component.

In providing the present coating composition, a compounding amount of the acrylic resin-modified silica particles is preferably from 0.3 to 90 parts by mass, more preferably from 0.5 to 30 parts by mass, and even more preferably from 1 to 15 parts by mass based on 100 parts by mass of a total solid content of the binder component from the viewpoints of scratch resistance, recoat adhesion, transparency, and the like of the resulting coating film.

The binder component used in the coating composition according to an embodiment of the present invention may be one of various known binder components for paints, but is preferably a binder component containing a base resin having a crosslinkable functional group and a curing agent.

Examples of the cross-linking functional group contained in the base resin include a carboxyl group, a hydroxyl group, an epoxy group, and a silanol group. Examples of the type of the base resin include an acrylic resin, a polyester resin, an alkyd resin, a urethane resin, an epoxy resin, and a fluororesin. Examples of the curing agent include polyisocyanate compounds, blocked polyisocyanate compounds, melamine resins, urea resins, carboxyl group-containing compounds, carboxyl group-containing resins, epoxy group-containing resins, and epoxy group-containing compounds.

Examples of a preferred combination of the base resin/the curing agent include hydroxyl group-containing resin/polyisocyanate compound, carboxyl group-containing resin/epoxy group-containing resin, hydroxyl group-containing resin/blocked polyisocyanate compound, and hydroxyl group-containing resin/melamine resin.

A hydroxyl group-containing resin is preferable as the base resin. The hydroxyl group-containing resin is not limited as long as it contains a hydroxyl group, and commonly known thermosetting resins can be suitably used. Examples of the hydroxyl group-containing resin include an alkyd resin, a polyester resin, an acrylic resin, and a cellulose resin. From the viewpoints of weather resistance, scratch resistance, transparency, and the like of the resulting coating film, the hydroxyl group-containing resin preferably contains a hydroxyl group-containing acrylic resin.

The hydroxyl group-containing acrylic resin can be produced by copolymerizing a hydroxyl group-containing polymerizable unsaturated monomer and additional polymerizable unsaturated monomer copolymerizable with the hydroxyl group-containing polymerizable unsaturated monomer. The hydroxyl group-containing polymerizable unsaturated monomer is a compound having one or more hydroxyl groups and one or more polymerizable unsaturated groups per molecule.

Specifically, the hydroxyl group-containing polymerizable unsaturated monomer is preferably a monoesterified product of acrylic acid or methacrylic acid and a dihydric alcohol having from 2 to 10 carbons, and examples thereof include 2-hydroxyethyl (meth)acrylate, 2-hydroxypropyl (meth)acrylate, 3-hydroxypropyl (meth)acrylate, 2-hydroxybutyl (meth)acrylate, 3-hydroxybutyl (meth)acrylate, 4-hydroxybutyl (meth)acrylate, caprolactone-modified hydroxyl group-containing (meth)acrylate, and 4-methylolcyclohexyl (meth)acrylate. Examples of a commercially available product of caprolactone-modified hydroxyl group-containing (meth)acrylate include "Placcel FM" (product name, available from Daicel Corporation), and examples of a commercially available product of 4-methylolcyclohexyl (meth)acrylate include "CHDMMA" (product name, available from Nihon Kasei Co., Ltd.).

From the viewpoint of scratch resistance of the resulting coating film, the hydroxyl group-containing polymerizable unsaturated monomer is preferably a polymerizable unsaturated monomer having a hydroxyl group-containing hydrocarbon group having from 2 to 20 carbons, and specific examples include 2-hydroxyethyl (meth)acrylate, 2-hydroxypropyl (meth)acrylate, 4-hydroxybutyl (meth)acrylate, and 4-methylolcyclohexyl acrylate. The hydroxyl group derived from the hydroxyl group-containing polymerizable unsaturated monomer functions as a crosslinkable functional group of the resulting copolymer resin.

The additional copolymerizable polymerizable unsaturated monomer is a compound that is not the hydroxyl group-containing polymerizable unsaturated monomer and that has one or more polymerizable unsaturated groups per molecule, and specific examples thereof are listed in (1) to (11) below.

(1) Aromatic polymerizable unsaturated monomers: for example, styrene, $\alpha$-methylstyrene, and vinyl toluene.

(2) Alicyclic hydrocarbon group-containing polymerizable unsaturated monomers having from 3 to 20 carbons: for example, bridged alicyclic hydrocarbon group-containing polymerizable unsaturated monomers having from 10 to 20 carbons such as isobornyl (meth)acrylate, tricyclodecanyl (meth)acrylate, adamantyl (meth)acrylate, 3,5-dimethyladamantyl (meth)acrylate, and 3-tetracyclododecyl (meth)acrylate; and polymerizable unsaturated monomers having an alicyclic hydrocarbon group having from 3 to 12 carbons, such as cyclohexyl (meth)acrylate, 4-methylcyclohexylmethyl (meth)acrylate, 4-ethylcyclohexylmethyl (meth)acrylate, 4-methoxycyclohexylmethyl (meth)acrylate, t-butylcyclohexyl (meth)acrylate, cyclooctyl (meth)acrylate, cyclododecyl (meth)acrylate, and tetrahydrofurfuryl (meth)acrylate.

(3) Polymerizable unsaturated monomers having a hydrocarbon group having a branched structure and 8 or more carbons: for examples, 2-ethylhexyl (meth)acrylate, isooctyl (meth)acrylate, isomyristyl (meth)acrylate, and isostearyl (meth)acrylate. Examples of a commercially available product thereof include "Isostearyl Acrylate" (product name, available from Osaka Organic Chemical Industry Ltd.).

(4) Linear or branched alkyl esters of (meth)acrylic acid having from 1 to 7 carbons: for example, methyl (meth)acrylate, ethyl (meth)acrylate, propyl (meth)acrylate, isopropyl (meth)acrylate, butyl (meth)acrylate, isobutyl (meth)acrylate, and t-Butyl (meth)acrylate.

(5) Linear alkyl esters of (meth)acrylic acid having from 8 to 22 carbons: for example, lauryl (meth)acrylate and stearyl (meth)acrylate.

(6) Epoxy group-containing polymerizable unsaturated monomers: for example, glycidyl (meth)acrylate.

(7) Nitrogen-containing polymerizable unsaturated monomers: for example, (meth)acrylamide, N,N-dimethylaminoethyl (meth)acrylate, vinylpyridine, and vinylimidazole.

(8) Other vinyl compounds: for example, vinyl acetate, vinyl propionate, vinyl chloride, vinylidene chloride, divinyl ether, and versatic acid vinyl esters "VeoVa 9" and "VeoVa 10" (product names, available from Japan Epoxy Resin).

(9) Unsaturated group-containing nitrile compounds: for example, (meth)acrylonitrile.

(10) Acidic functional group-containing polymerizable unsaturated monomers: for example, carboxyl group-containing unsaturated monomers such as (meth)acrylic acid, crotonic acid, itaconic acid, maleic acid, and maleic anhydride; sulfonic acid group-containing unsaturated monomers such as vinyl sulfonic acid and sulfoethyl (meth)acrylate; and acidic phosphate-based monomers such as 2-(meth)acryloyloxyethyl acid phosphate, 2-(meth)acryloyloxypropyl acid phosphate, 2-(meth)acryloyloxy-3-chloropropyl acid phosphate, and 2-(meth)acryloyloxyethylphenyl phosphate.

(11) Alkoxysilyl group-containing polymerizable unsaturated monomers: for example, vinyltrimethoxysilane, vinyltriethoxysilane, acryloxyethyl trimethoxysilane, methacryloxyethyl trimethoxysilane, acryloxypropyl trimethoxysilane, methacryloxypropyl trimethoxysilane, acryloxypropyl triethoxysilane, methacryloxypropyl triethoxysilane, and vinyltris($\beta$-methoxyethoxy)silane.

The additional copolymerizable polymerizable unsaturated monomers described above may be used alone or in a combination of two or more.

The hydroxyl group-containing acrylic resin can be produced by copolymerizing a polymerizable unsaturated monomer mixture formed of the hydroxyl group-containing polymerizable unsaturated monomer and the additional polymerizable unsaturated monomer described above. From the viewpoints of scratch resistance, recoat adhesion, transparency and finish characteristics of the resulting coating film, a suitable proportion of the hydroxyl group-containing polymerizable unsaturated monomer to be used is from 15 to 50 mass%, preferably from 20 to 45 mass%, based on a total mass of the copolymerization monomer components.

From the viewpoints of finish characteristics (particularly gloss), water resistance, and weather resistance, the additional polymerizable unsaturated monomer is preferably the monomer (1) described above. The suitable proportion of the monomer (1) to be used is approximately from 3 to 40 mass%, preferably approximately from 5 to 30 mass%, based on the total mass of the copolymerization monomer components.

From the viewpoints of finish characteristics, scratch resistance, and water resistance, the additional polymerizable unsaturated monomer is preferably the monomer (2) described above. The suitable proportion of the monomer (2) to be used is approximately from 3 to 40 mass%, preferably approximately from 5 to 30 mass%, based on the total mass of the copolymerization monomer components.

From the viewpoints of wettability to an object to be coated and finish characteristics, the additional polymerizable unsaturated monomer is preferably the monomer (3) described above. The suitable proportion of the monomer (3) to be used is approximately from 3 to 45 mass%, preferably approximately from 8 to 40 mass%, based on the total mass of the copolymerization monomer components.

In addition, from the viewpoints of achieving a resin that provides a coating film having extremely excellent acid resistance and having extremely excellent scratch resistance, a suitable total mass of the monomer (1), the monomer (2) and the monomer (3) is in a range of approximately from 35 to 85 mass%, preferably approximately from 40 to 80 mass%, based on the total mass of the copolymerization monomer components.

Among the additional polymerizable unsaturated monomers, an acidic functional group-containing polymerizable unsaturated monomer such as a carboxyl group-containing unsaturated monomer, a sulfonic acid group-containing unsaturated monomer, or an acidic phosphoric acid ester-based unsaturated monomer can act as an internal catalyst when the resulting hydroxyl group-containing resin undergoes a cross-linking reaction with the polyisocyanate compound. An amount of the acidic functional group-containing polymerizable unsaturated monomer to be used is preferably in a range of approximately from 0.1 to 5 mass%, and can be in a range of approximately from 0.5 to 3% mass%, based on the total amount of monomer mixture constituting the resin.

The copolymerization method for copolymerizing the monomer mixture to prepare the hydroxyl group-containing acrylic resin is not limited, and a known copolymerization method can be used. In particular, a solution polymerization method in which polymerization is carried out in an organic solvent in the presence of a polymerization initiator is preferable.

Examples of the organic solvent used in the solution polymerization method include: aromatic solvents, such as toluene, xylene, and high-boiling-point aromatic hydrocarbons; ester-based solvents, such as ethyl acetate, butyl acetate, 3-methoxybutyl acetate, ethylene glycol ethyl ether acetate, and propylene glycol methyl ether acetate; ketone-based solvents, such as methyl ethyl ketone, methyl isobutyl ketone, and methyl amyl ketone; glycol ether-based solvents, such as ethylene glycol monomethyl ether, ethylene glycol monoethyl ether, diethylene glycol monomethyl ether, ethylene glycol monobutyl ether, and propylene glycol monomethyl ether; and propyl propionate, butyl propionate, and ethoxyethyl propionate. Examples of commercially available products of high-boiling-point aromatic hydrocarbons include "Swasol 1000" (product name, available from Cosmo Oil Co., Ltd., an oil-based high-boiling-point solvent).

These organic solvents can be used alone or in a combination of two or more. In particular, when the hydroxyl group-containing acrylic resin has a high hydroxyl value, the organic solvent is preferably an ester-based solvent or a ketone-based solvent having a high boiling point from the viewpoint of the solubility of the resin. Furthermore, a combination of high-boiling-point aromatic solvents may also be used.

Examples of the polymerization initiator that can be used in the copolymerization of the hydroxyl group-containing acrylic resin include known radical polymerization initiators, such as 2,2'-azobisisobutyronitrile, benzoyl peroxide, 2,2-di(t-amylperoxy)butane, di-t-butyl peroxide, di-t-amyl peroxide, t-butyl peroctoate, and 2,2'-azobis(2-methylbutyronitrile).

The hydroxyl group-containing acrylic resin may be formed of one type of copolymer, or may be formed of two or more types of copolymers. The hydroxyl group-containing acrylic resin has a hydroxyl value in a range of preferably from 10 to 200 mg KOH/g, more preferably from 50 to 200 mg KOH/g, and further particularly preferably from 80 to 200 mg KOH/g, from the viewpoints of scratch resistance, recoat adhesion, and the like.

The hydroxyl group-containing acrylic resin has a weight-average molecular weight in a range of preferably from 3000 to 40000, more preferably from 4000 to 30000, and further particularly preferably from 5000 to 20000, from the viewpoints of scratch resistance, transparency, and the like of the resulting coating film.

The hydroxyl group-containing acrylic resin has a glass transition temperature in a range of preferably from -30°C to 50°C, particularly preferably from -20°C to 40°C, from the viewpoints of scratch resistance, transparency, and the like of the resulting coating film.

The curing agent may be a polyisocyanate compound (including blocked ones) or an amino resin such as a melamine resin, a guanamine resin, and a urea resin. From the viewpoints of achieving a coating film having superior weather resistance, scratch resistance, coating film hardness, adhesion, and the like, a polyisocyanate compound and/or a melamine resin is preferable.

A polyisocyanate compound is a compound having two or more isocyanate groups per molecule. Examples of the polyisocyanate compound include: aliphatic diisocyanates, such as hexamethylene diisocyanate or trimethylhexamethylene diisocyanate; cycloaliphatic diisocyanates, such as hydrogenated xylylene diisocyanate or isophorone diisocyanate; organic diisocyanates per se, such as aromatic diisocyanates such as tolylene diisocyanate or 4,4'-diphenylmethane diisocyanate, or an adduct of each of the organic diisocyanates and a polyhydric alcohol, a low-molecular-weight polyester resin or water, etc., or a cyclized polymer of each of the organic diisocyanates described above, or isocyanate/biurets. Compounds produced by blocking these polyisocyanate compounds with a blocking agent can also be used as the polyisocyanate compound. When a blocked isocyanate compound is used, a dissociation catalyst is preferably used in combination.

Typical examples of commercially available products of the isocyanate compound include Burnock D-750, -800, DN-950, -970 or 15-455 (which are names of products available from DIC Corporation), Sumidur N3300, N3390, Desmodur N3400, N3900 (which are names of products available from Sumitomo Bayer Urethane Co., Ltd.), Duranate 24A-100, TPA-100, TLA-100, P301-75E (which are names of products available from Asahi Kasei Chemicals Corporation).

Examples of the polyisocyanate compound having a blocked isocyanate group include those produced by blocking the above-described polyisocyanate compounds having a free isocyanate group with a known blocking agent such as an oxime, a phenol, an alcohol, a lactam, a malonate, or a mercaptane. Typical examples of commercially available products of the polyisocyanate compound having a blocked isocyanate group include Burnock D-550 (product name, available from DIC Corporation) and Duranate SBN-70 (product name, available from by Asahi Kasei Corporation).

The melamine resin may be, for example, preferably a melamine resin produced by etherifying a methylol group of methylolated melamine with a monohydric alcohol having from 1 to 8 carbons. The etherified melamine resin may be one in which all methylol groups of methylolated melamine are etherified, or one partially etherified with some methylol groups and imino groups remaining.

Specific examples of the etherified melamine resin include alkyl-etherified melamines, such as methyl-etherified melamine, ethyl-etherified melamine, and butyl-etherified melamine. The etherified melamine resin may be used alone or in a combination of two or more types thereof.

Examples of commercially available products of the melamine resin include the following melamine resins: butylated melamine resins (such as U-VAN 20SE-60 and U-VAN 225 available from Mitsui Chemicals, Inc.; Super Beckamin G840 and Super Beckamin G821 available from DIC Corporation); methylated melamine resins (such as Cymel 303 available from Nippon Cytec Industries Co., Ltd., and Sumimal M-100 and Sumimal M-40S available from Sumitomo Chemical Co., Ltd.); methyl-etherified melamine resins (Cymel 303, Cymel 325, Cymel 327, Cymel 350, and Cymel 370 available from Nippon Cytec Industries Co., Ltd., and Sumimal M55 available from Sumitomo Chemical Co., Ltd.); methylated and butylated mixed etherified melamine resins (Cymel 253, Cymel 202, Cymel 238, Cymel 254, Cymel 272, and Cymel 1130 available from Nippon Cytec Industries Co., Ltd., and Sumimal M66B available from Sumitomo Chemical Co., Ltd.); and methylated and isobutylated mixed etherified melamine resins (Cymel XV805 available from Nippon Cytec Industries Co., Ltd.).

The compounding proportion of the curing agent may be appropriately set so that the coating film cures and has sufficient performance. From the viewpoint of curability of the resulting coating film, the ratio of the hydroxyl group-containing resin/the curing agent is preferably in a range from 80/20 to 50/50 in terms of mass ratio.

When a polyisocyanate compound is used as the curing agent, the compounding proportion is preferably one that allows an equivalent ratio (NCO/OH) of the isocyanate groups of the polyisocyanate compound to the hydroxyl groups of the hydroxyl group-containing resin in the coating composition according to an embodiment of the present invention to be in a range of usually from 0.5 to 2.0, particularly from 0.7 to 1.5.

In a method of producing the present coating composition, the coating composition may further contain a commonly-used paint additive, such as a curing catalyst, a pigment, an ultraviolet absorber (such as a benzotriazole-based absorber, a triazine-based absorber, a salicylic acid derivative-based absorber, and a benzophenone-based absorber), a light stabilizer (such as a hindered piperidines), a thickener, an antifoaming agent, a plasticizer, an organic solvent, a surface conditioner, or an antisettling agent. Only one of these additives may be contained, or a combination or two or more of these additives may be contained.

Examples of the curing catalyst include: organometallic catalysts, such as tin octylate, dibutyl tin di(2-ethylhexanoate), dioctyl tin di(2-ethylhexanoate), dioctyl tin diacetate, dibutyl tin dilaurate, dibutyl tin oxide, dioctyl tin oxide, and lead 2-ethylhexanoate; acid compounds such as paratoluenesulfonic acid, dodecylbenzenesulfonic acid, dinonylnaphthalenesulfonic acid, dinonylnaphthalenedisulfonic acid, monobutyl phosphate, dibutyl phosphate, octyl phosphate, and di-2-ethylhexyl phosphoric acid; and basic compounds such as trimethylamine, triethylamine, dimethylcyclohexylamine, N-tetramethylhexane-1,6-diamine, N-pentamethyldiethylenetriamine, and 2-methyl-1,4-diazabicyclo[2,2,2]octane. These can be used alone or in combination of two or more types.

When the coating composition contains the curing catalyst, a compounding amount of the curing catalyst is preferably in a range from 0.05 to 10 parts by mass, more preferably in a range from 0.1 to 5 parts by mass, and even more preferably in a range from 0.2 to 3 parts by mass, based on 100 parts by mass of a total resin solid content of the hydroxyl group-containing resin and the curing agent.

When the coating composition contains the ultraviolet absorber, a compounding amount of the ultraviolet absorber is preferably in a range from 0.1 to 10 parts by mass, more preferably in a range from 0.2 to 5 parts by mass, and even more preferably in a range from 0.3 to 4 parts by mass, based on 100 parts by mass of the total resin solid content of the hydroxyl group-containing resin and the curing agent.

When the coating composition contains the light stabilizer, the compounding amount of the light stabilizer is preferably in a range from 0.1 to 10 parts by mass, more preferably in a range from 0.2 to 5 parts by mass, and even more preferably in a range from 0.3 to 4 parts by mass, based on 100 parts by mass of the total resin solid content of the hydroxyl group-containing resin and the curing agent.

The coating composition may be a one-component paint, or a multi-component paint such as a two-component paint. When an unblocked polyisocyanate compound is used as the curing agent in the coating composition according to an embodiment of the present invention, from the viewpoint of storage stability, the coating composition is preferably a two-component paint including a main agent that contains a hydroxyl group-containing resin and including a curing agent. preferably the main agent and the curing agent are mixed immediately before use.

The form of the coating composition is not limited, but is preferably an organic solvent solution type or a non-aqueous dispersion type.

Examples of the organic solvent include: ketones, such as acetone, methyl ethyl ketone and methyl isobutyl ketone; esters, such as ethyl acetate, butyl acetate, methyl benzoate, ethyl ethoxypropionate, ethyl propionate, and methyl propionate; ethers, such as tetrahydrofuran, dioxane, and dimethoxyethane; glycol ethers, such as ethylene glycol monomethyl ether, ethylene glycol monoethyl ether, diethylene glycol monomethyl ether, propylene glycol monomethyl ether acetate, and 3-methoxybutyl acetate; aromatic hydrocarbons, and aliphatic hydrocarbons.

These can be used in combination as appropriate according to the purpose of adjusting the viscosity, adjusting the applicability, and the like.

The solid content of the coating composition is not limited. For example, from the viewpoints of smoothness of the cured coating film and decreasing the drying time, a solvent such as the organic solvent described above is preferably used to appropriately adjust the solid content of the coating composition to give a viscosity in a range from 15 to 60 seconds according to Ford Cup No. 4 at 20°C.

In the present specification, the term "solid content" means a residue excluding volatile components, and the residue may be solid or liquid at room temperature. The solid content mass can be calculated by multiplying the sample mass before drying by the solid content ratio, which is the ratio of the mass of the residue after drying to the mass before drying.

## Coating Method

The object to be coated with the coating composition is not limited. Examples of the object to be coated include: metal substrates, such as steel sheets such as cold-rolled steel sheets, galvanized steel sheets, zinc alloy-plated steel sheets, stainless steel sheets and tin-plated steel sheets, as well as aluminum sheets and aluminum alloy sheets; and various plastic materials. The object to be coated may also be vehicle bodies of various vehicles such as automobiles, two-wheeled vehicles, or container vehicles formed of the materials described above.

The object to be coated may be subjected to surface treatment, such as phosphate treatment, chromate treatment, or composite oxide treatment, on the metal surface of the metal substrates or vehicle bodies. Further, the object to be coated may be the above-mentioned metal substrate, vehicle body, or the like with the following coating film(s) formed thereon: a primer coating film of various electrodeposition paints or the like; or the primer coating film and an intermediate coating film; or the primer coating film, the intermediate coating film, and a basecoat film; or the primer coating film, the intermediate coating film, the basecoat film, and a clearcoat film.

The application method of the coating composition is not limited, and examples of the application method include air spraying, airless spraying, rotary atomization coating, and curtain coating. These methods form a wet coating film. In these coating methods, an electrostatic voltage may be applied as necessary. Among these methods, air spraying or rotary atomization coating is particularly preferred.

The application amount of the coating composition is preferably an amount that gives a cured film thickness of approximately from 10 to 60 μm typically.

When air spraying, airless spraying, and rotary atomization coating are used, a solvent such as an organic solvent is preferably used to appropriately adjust the viscosity of the present paint to a viscosity range suitable for the application. Such a viscosity range is typically from 15 to 60 seconds at 20°C as measured by a Ford Cup No. 4 viscometer.

The wet coating film formed by applying the coating composition to the object to be coated is cured by heating, and the heating can be carried out by known heating apparatus. For example, a drying furnace such as a hot air furnace, an electric furnace, or an infrared induction heating furnace can be used. The heating temperature may be in a range from 60 to 180°C, preferably from 70 to 150°C. The heating time is not limited, but is preferably in a range from 10 to 60 minutes, preferably from 15 to 30 minutes.

Since the coating composition can provide a cured coating film having both excellent scratch resistance and excellent coating film appearance, it can be suitably used as an overcoat/topcoat/clearcoat coating composition. The present paint can be particularly suitably used as a paint for automobiles.

Method of Forming Multilayer Coating Film

Examples of the method of forming a multilayer coating film in which the coating composition of an embodiment of the present invention is applied as a topcoat/clearcoat paint include a method of forming a multilayer coating film by sequentially applying at least one layer of a colored basecoat paint and at least one layer of a clearcoat paint to an object to be coated, the method including applying the coating composition according to an embodiment of the present invention as the clearcoat paint for the uppermost layer.

Specific examples of the method of forming a multilayer coating film include: a 2-coat-1-bake method in which an undercoat film is formed using an electrodeposition paint, the undercoat film is cured, then an intermediate coat film is formed on the undercoat film using an intermediate coat paint, the intermediate coat film is cured, then a colored basecoat paint is applied on the intermediate coat film, preheating is performed at, for example, 40 to 90°C for 3 to 30 minutes to promote volatilization of a solvent in the colored basecoat paint as necessary without curing the colored basecoat film, the coating composition according to an embodiment of the present invention is applied as a clearcoat paint on the uncured colored basecoat film, and then the colored basecoat film and the clearcoat film are cured together; and a 3-coat-1-bake method in which an undercoat film is formed using an electrodeposition paint, the undercoat film is cured, an intermediate coat film is then formed on the undercoat film using an intermediate coat paint, preheating is performed at, for example, 40 to 90°C for 3 to 30 minutes to promote volatilization of a solvent in the intermediate coat paint as necessary without curing the intermediate coat film, a colored basecoat paint is applied on the uncured intermediate coat film, preheating is performed at, for example, 40 to 90°C for 3 to 30 minutes to promote volatilization of a solvent in the colored basecoat paint as necessary without curing the colored basecoat film, the coating composition according to an embodiment of the present invention is applied as a clearcoat paint on the uncured colored basecoat film, and then the intermediate coat film, the colored basecoat film, and the clearcoat film are cured together.

As the intermediate coat paint used in the above, an ordinary thermosetting intermediate coat paint that has been known in the art can be used, and specifically, for example, a paint produced by appropriately combining, in a base resin such as an acrylic resin, a polyester resin, an alkyd resin, or a urethane resin, a crosslinking agent, such as an amino resin, a polyisocyanate compound, or a blocked polyisocyanate compound, with a reactive functional group contained in the base resin can be used. The reactive functional group contained in the base resin is preferably a hydroxyl group.

As the intermediate coat paint, for example, a water-based paint, an organic solvent-based paint, or a powder paint can be used. Among them, a water-based paint is preferable from the viewpoints of environmental load reduction, and finished appearance and the like of the coating film.

As the basecoat paint used above, an ordinary thermosetting basecoat paint that has been known in the art can be used, and specifically, for example, a paint produced by appropriately combining, in a base resin such as an acrylic resin, a polyester resin, an alkyd resin, or a urethane resin, a crosslinking agent, such as an amino resin, a polyisocyanate compound, or a blocked polyisocyanate compound, with a reactive functional group contained in the base resin can be used. The reactive functional group contained in the base resin is preferably a hydroxyl group.

As the basecoat paint, for example, a water-based paint, an organic solvent-based paint, or a powder paint can be used. Among them, a water-based paint is preferable from the viewpoints of environmental load reduction, and finished appearance and the like of the coating film.

In the method of forming a multilayer coating film, in a case where two or more layers of clearcoat are applied, as a clearcoat paint for a layer other than the uppermost layer, the coating composition according to an embodiment of the present invention may be used or a thermosetting clearcoat paint that has been known in the art may be used.

Examples

The present invention will be described more specifically below through production examples, examples, and comparative examples. However, the present invention is not limited by these examples. In each example, "parts" and "%" are based on mass unless otherwise specified. In addition, the film thickness of the coating film is based on a cured coating film.

Production of Silica Particles (a11) Having a Polymerizable Unsaturated Group

333 parts (solid content 100 parts) of "PGM-ST" (product name, available from Nissan Chemical Industries, Ltd., average primary particle size of silica: 15 nm, silica concentration: 30 mass%, dispersion medium: propylene glycol monomethyl ether) and 10 parts of deionized water were placed in a separable flask equipped with a reflux condenser, a thermometer, and a stirrer. Then, 10 parts of "KBM-503" (product name, available from Shin-Etsu Chemical Co., Ltd., γ-methacryloyloxypropyltrimethoxysilane) was added, and the mixture was subjected to dehydration condensation reaction under stirring at 80°C for two hours. Thereafter, 0.03 parts of tetra-n-butylammonium fluoride was added, and the mixture was further reacted under stirring for one hour. After completion of the reaction, 30 parts of propylene glycol monomethyl ether was added, and then volatile components were distilled off under reduced pressure, resulting in a dispersion liquid of polymerizable unsaturated group-containing silica particles (a11) having a solid content of surface-modified silica particles of 40%.

Production of Dispersion of Acrylic Resin-Modified Silica Particles (AB)

Example 1

To a separable flask equipped with a reflux condenser, a thermometer, a stirrer, and a nitrogen gas inlet, 135 parts of propylene glycol monomethyl ether was charged, and the temperature was raised to 100°C under nitrogen gas purging. After the temperature reached 100°C, a monomer mixture composed of 312.5 parts of the dispersion liquid of polymerizable unsaturated group-containing silica particles (a11) (125 parts of solid content), 19 parts of 2-hydroxyethyl methacrylate (HEMA), 30 parts of styrene (St), 1 part of methyl methacrylate (MMA), 49 parts of 2-ethylhexyl acrylate (2EHA), 1 part of acrylic acid (AAc), and 1.5 parts of 2,2'-azobis(2-methylbutyronitrile) (polymerization initiator) was added dropwise over 2 hours. Then, after aging at 100°C for 1 hour, a mixed solution of 0.5 parts of 2,2'-azobis(2-methylbutyronitrile) (polymerization initiator) and 20 parts of propylene glycol monomethyl ether was added, followed by aging for another 2 hours. Next, 10 parts of "X-22-4741" (product name, available from Shin-Etsu Silicones, side chain type epoxy group-polyoxyethylene-oxypropylene chain-modified dimethyl silicone, with a mass ratio of polysiloxane structure to polyoxyalkylene chain calculated by the following method being 22/78) was added, followed by aging for another 3 hours. The polymerization rate determined from the nonvolatile content was 99%. Thereafter, propylene glycol monomethyl ether was added, and the solvent was replaced by azeotropic distillation under reduced pressure, resulting in a dispersion of acrylic resin-modified silica particles (AB-1) having a measured nonvolatile content of 40%.

Examples 2 to 13 and Comparative Example 1

Acrylic resin-coated silica particles (AB-2) to (AB-14) were produced in the same manner as in Example 1 except that the formulations were changed to those presented in Tables 1 and 2.

[Table 1]

Table 1

| | | | | Examples | | | | | | |
|---|---|---|---|---|---|---|---|---|---|---|
| | | | | 1 | 2 | 3 | 4 | 5 | 6 | 7 |
| Acrylic Resin-Modified Silica Particles | | | | AB-1 | AB-2 | AB-3 | AB-4 | AB-5 | AB-6 | AB-7 |
| Silica Particles (a1) Bonded to an Acrylic Resin Having a First Chemically Reactive Group | Silica Particles (a11) Having a Polymerizable Unsaturated Group | | | 125 | 125 | 125 | 125 | 125 | 125 | 125 |
| | Polymerizable Unsaturated Monomer Mixture (a12) | HEMA | | 23.2 | 23.2 | 23.2 | 23.2 | 23.2 | 23.2 | 9.5 |
| | | HEA | | | | | | | | |
| | | St | | 30 | 30 | 30 | 30 | 30 | 30 | 30 |
| | | MMA | | 1 | 1 | 1 | 1 | 1 | 1 | 10.5 |
| | | 2EHA | | 44.8 | 44.8 | 44.8 | 44.8 | 44.8 | 44.8 | 49 |
| | | "X-22-174ASX" Note 1 | | | | | | | | |
| | | "Light Ester 130MA" Note 2 | | | | | | | | |
| | | Polymerizable Unsaturated Monomer (a121) Having a First Chemically Reactive Group | AAc | 1 | 1 | 1 | 1 | 1 | 1 | 1 |
| Compound (a2) Having a Second Chemically Reactive Group Reactable with the First Chemically Reactive Group, and at Least One Chain Selected from the Group Consisting of a Polyoxyalkylene Chain and a Polyester Chain, and having a | "X-22-4741" | | | 10 | | 2.4 | 4.8 | 19.1 | 28.6 | 10 |
| | "KF-1002" Note 3 | | | | 10 | | | | | |
| Polysiloxane Structure | | | | | | | | | | |
| Molecular Weight of (a2) | | 2500 | 4300 | 2500 | 2500 | 2500 | | 2500 | | 2500 |
| Ratio of (a1)/(a2) | | 96/4 | 96/4 | 99/1 | 98/2 | 92/8 | | 89/11 | | 96/4 |
| Mass Ratio of Polysiloxane Structure/at Least One Chain Selected from the Group Consisting of a Polyoxyalkylene Chain and a Polyester Chain | | 22/78 | 50/50 | 22/78 | 22/78 | 22/78 | | 22/78 | | 22/78 |

(continued)

| | | | Examples | | | | | | |
|---|---|---|---|---|---|---|---|---|---|
| | | | 1 | 2 | 3 | 4 | 5 | 6 | 7 |
| Hydroxyl Value of Acrylic Resin Produced from (a12) | 100.1 | 100.1 | 100.1 | 100.1 | 100.1 | | 100.1 | | 41.0 |

[Table 2]

Table 2

| | | | | Examples | | | | | | Comparative Example |
|---|---|---|---|---|---|---|---|---|---|---|
| | | | | 8 | 9 | 10 | 11 | 12 | 13 | 1 |
| Acrylic Resin-Modified Silica Particles | | | | AB-8 | AB-9 | AB-10 | AB-11 | AB-12 | AB-13 | AB-14 |
| Silica Particles (a1) Bonded to an Acrylic Resin Having a First Chemically Reactive Group | Silica Particles (a11) Having a Polymerizable Unsaturated Group | | | 125 | 125 | 125 | 125 | 125 | 125 | 125 |
| | Polymerizable Unsaturated Monomer Mixture (a12) | HEMA | | 14 | 19 | 27.5 | 32 | 36.5 | 23.2 | 23.2 |
| | | HEA | | | | | | | | |
| | | St | | 30 | 30 | 25.5 | 23 | 20 | 27.7 | 30 |
| | | MMA | | 6 | 1 | 1 | 1 | 1 | 1 | 1 |
| | | 2EHA | | 49 | 49 | 45 | 43 | 41.5 | 41.4 | 44.8 |
| | | "X-22-174ASX" Note 1 | | | | | | | 1.2 | 1 |
| | | "Light Ester 130MA" Note 2 | | | | | | | 4.55 | |
| | | Polymerizable Unsaturated Monomer (a121) Having a First Chemically Reactive Group | AAc | 1 | 1 | 1 | 1 | 1 | 1 | 1 |
| Compound (a2) Having a | "X-22-4741" | | | 10 | 10 | 10 | 10 | 10 | 5 | |
| | "KF-1002" Note 3 | | | | | | | | | |

(continued)

| | | | Examples | | | | | | Comparative Example |
|---|---|---|---|---|---|---|---|---|---|
| | | | 8 | 9 | 10 | 11 | 12 | 13 | 1 |
| Second Chemically Reactive Group Reactable with the First Chemically Reactive Group, and at Least One Chain Selected from the Group Consisting of a Polyoxyalkylene Chain and a Polyester Chain, and having a Polysiloxane Structure | | | | | | | | | |
| Molecular Weight of (a2) | 2500 | 2500 | 2500 | 2500 | 2500 | 2500 | | | |
| Ratio of (a1)/(a2) | 96/4 | 96/4 | 96/4 | 96/4 | 96/4 | 98/2 | - | | |
| Mass Ratio of Polysiloxane Structure/at Least One Chain Selected from the Group Consisting of a Polyoxyalkylene Chain and a Polyester Chain | 22/78 | 22/78 | 22/78 | 22/78 | 22/78 | 22/78 | - | | |
| Hydroxyl Value of Acrylic Resin Produced from (a12) | 60.4 | 82.0 | 118.1 | 138.1 | 157.5 | 100.1 | 100.1 | | |

(Note 1) to (Note 3) in the tables have the following meanings.

(Note 1) "X-22-174ASX": product name, available from Shin-Etsu Silicones, single-end type methacryl-modified dimethyl silicone;
(Note 2) "Light Ester 130MA": product name, available from Kyoeisha Chemical Co., Ltd., methoxy polyethylene glycol methacrylate;
(Note 3) "KF-1002": product name, available from Shin-Etsu Silicones, side chain type epoxy group-polyoxyethylene-oxypropylene chain-modified dimethyl silicone, with a mass ratio of the polysiloxane structure to the polyoxyalkylene chain calculated by a method below being 50/50.

The mass ratio of the polysiloxane structure to the polyoxyalkylene chain was calculated based on an analysis by proton NMR.

Specifically, the analysis by proton NMR used Bruker's Biospin Avance 600 (product name) as a proton NMR measuring instrument and used chloroform-d as a solvent. Under the measurement conditions of an observation frequency of 150 MHz and 32 times of integration, an integrated value of the peaks (from 0.0 to 0.1 ppm, from 0.4 to 0.6 ppm) of protons of alkyl groups of the polysiloxane structure and an integrated value of the peaks (from 1.1 to 1.2 ppm, from 3.5 to 3.7 ppm) of protons of the oxyalkylene chain were calculated. Based on the resulting ratio of the integrated value of the peaks (from 0.0 to 0.1 ppm, from 0.4 to 0.6 ppm) of protons of alkyl groups of the polysiloxane structure to the integrated value of the peaks (from 1.1 to 1.2 ppm, from 3.5 to 3.7 ppm) of protons of the oxyalkylene chain, the mass ratio of the polysiloxane structure to the polyoxyalkylene chain was calculated.

Example 14

To a separable flask equipped with a reflux condenser, a thermometer, a stirrer, and a nitrogen gas inlet, 135 parts of propylene glycol monomethyl ether was charged, and the temperature was raised to 100°C under nitrogen gas purging. After the temperature reached 100°C, a monomer mixture composed of 312.5 parts of the dispersion liquid of polymerizable unsaturated group-containing silica particles (a11) (125 parts of solid content), 19 parts of 2-hydroxyethyl methacrylate (HEMA), 27.4 parts of styrene (St), 1 part of methyl methacrylate (MMA), 44.7 parts of 2-ethylhexyl acrylate (2EHA), 1 part of acrylic acid (AAc), 2.4 parts of "X-22-174ASX" (product name, available from Shin-Etsu Silicones, single-end type methacryl-modified dimethyl silicone), 4.6 parts of "Light Ester 130MA" (product name, available from Kyoeisha Chemical Co., Ltd., methoxy polyethylene glycol methacrylate), and 1.5 parts of 2,2'-azobis(2-methylbutyronitrile) (polymerization initiator) was added dropwise over 2 hours. Then, after aging at 100°C for 1 hour, a mixed solution of 0.5 parts of 2,2'-azobis(2-methylbutyronitrile) (polymerization initiator) and 20 parts of propylene glycol monomethyl ether was added, followed by aging for another 2 hours. The polymerization rate determined from the nonvolatile content was 99%. Thereafter, propylene glycol monomethyl ether was added, and the solvent was replaced via azeotropic distillation under reduced pressure, resulting in a dispersion of acrylic resin-modified silica particles (AB-15) having a measured nonvolatile content of 40%.

Examples 15 to 17 and Comparative Example 2

Acrylic resin-coated silica particles (AB-16) to (AB-19) were produced in the same manner as in Example 14 except that the formulations were changed to those presented in Table 3.

[Table 3]

Table 3

| | Examples | | | | Comparative Example |
|---|---|---|---|---|---|
| | 14 | 15 | 16 | 17 | 2 |
| Acrylic Resin-Modified Silica Particles | AB-15 | AB-16 | AB-17 | AB-18 | AB-19 |
| Silica Particles (a11) Having a Polymerizable Unsaturated Group | 125 | 125 | 125 | 125 | 125 |

(continued)

| | | | Examples | | | | Comparative Example |
|---|---|---|---|---|---|---|---|
| | | | 14 | 15 | 16 | 17 | 2 |
| Polymerizable Unsaturated Monomer Mixture (a13) | HEMA | | 23.2 | 23.2 | 23.2 | 23.2 | 23.2 |
| | St | | 27.2 | 25.4 | 21.7 | 25.9 | 30 |
| | MMA | | 1 | 1 | 1 | 1 | 1 |
| | 2EHA | | 40.7 | 37.9 | 32.5 | 38.8 | 43.8 |
| | AAc | | 1 | 1 | 1 | 1 | 1 |
| | Compound (a131) Having a Polymerizable Unsaturated Group and Further Having a Polysiloxane Structure | "X-22-174ASX" Note 1 | 2.4 | 2.4 | 2.4 | | |
| | | "KF-2012" Note 4 | | | | 0.1 | 1 |
| | Polymerizable Unsaturated Monomer (a132) Having a Polymerizable Unsaturated Group and Further Having at Least One Chain Selected from the Group Consisting of a Polyoxyalkylene Chain and a Polyester Chain | "Light Ester 130MA"Note 2 | 4.6 | 9.1 | 18.2 | 10 | |
| Molecular Weight of (a2) | | | - | - | - | - | - |
| Ratio of (a1)/(a2) | | | - | - | - | - | - |
| Mass Ratio of Polysiloxane Structure/at Least One Chain Selected from the Group Consisting of a Polyoxyalkylene Chain and a Polyester Chain | | | 37/63 | 22/78 | 13/87 | 1/99 | - |
| Hydroxyl Value of Acrylic Resin Produced from (a13) | | | 100.1 | 100.1 | 100.1 | 100.1 | 100.1 |

(Note 4) in the table has the following meaning.

(Note 4) "KF-2012": product name, available from Shin-Etsu Silicones, single-end type methacryl-modified dimethyl silicone.

Production of Hydroxyl Group-Containing Acrylic Resin

Production Example 1

30 parts of "Swasol 1000" (product name, available from Cosmo Oil Co., Ltd., aromatic organic solvent) and 10 parts of n-butanol were placed in a reaction vessel equipped with a thermometer, a thermostat, a stirrer, a reflux condenser, a nitrogen-introducing tube, and a dropping device. While nitrogen gas was blown into the reaction vessel, the liquid placed inside the reaction vessel was stirred at 125°C, and a monomer mixture composed of 35 parts of 2-hydroxypropyl acrylate, 20 parts of styrene, 45 parts of isobutyl methacrylate, and 1.5 parts of 2,2'-azobis(2-methylbutyronitrile) (polymerization initiator) was added dropwise to the liquid at a steady rate over 4 hours. After aging was performed at 125°C for 30 minutes, a solution composed of 0.5 parts of 2,2'-azobis(2-methylbutyronitrile) and 5.0 parts of "Swasol 1000" was added dropwise at a steady rate over 1 hour. Thereafter, the mixture was aged at 125°C for 1 hour, then cooled, and further diluted with 6 parts of isobutyl acetate, resulting in a hydroxyl group-containing acrylic resin solution having a solid content concentration of 65 mass%. The resulting hydroxyl group-containing acrylic resin had a hydroxyl value of 151 mg KOH/g, a weight-average molecular weight of 7000, and a glass transition temperature of 36.4°C.

Production of Acrylic Resin Having a Hydroxyl Group and an Alkoxysilyl Group

Production Example 2

30 parts of "Swasol 1000" (product name, available from Cosmo Oil Co., Ltd., aromatic organic solvent) and 10 parts of n-butanol were placed in a reaction vessel equipped with a thermometer, a thermostat, a stirrer, a reflux condenser, a nitrogen-introducing tube, and a dropping device. While nitrogen gas was blown into the reaction vessel, the liquid placed inside the reaction vessel was stirred at 125°C, and a monomer mixture composed of 30 parts of γ-methacryloxypropyltrimethoxysilane, 35 parts of 2-hydroxypropyl acrylate, 20 parts of styrene, 15 parts of isobutyl methacrylate, and 1.5 parts of 2,2'-azobis(2-methylbutyronitrile) (polymerization initiator) was added dropwise to the liquid at a steady rate over 4 hours. After aging was performed at 125°C for 30 minutes, a solution composed of 0.5 parts of 2,2'-azobis(2-methylbutyronitrile) and 5.0 parts of "Swasol 1000" was added dropwise at a steady rate over 1 hour. Thereafter, the mixture was aged at 125°C for 1 hour, then cooled, and further diluted with 6 parts of isobutyl acetate, resulting in a solution of an acrylic resin having a hydroxyl group and an alkoxysilyl group and having a solid content concentration of 65 mass%. The resulting acrylic resin having a hydroxyl group and an alkoxysilyl group had an alkoxysilyl group content of 1.2 mmol/g, a hydroxyl value of 151 mg KOH/g, a weight-average molecular weight of 7000, and a glass transition temperature of 16.6°C.

Production of Hydroxyl Group-Containing Polyester Resin

Production Example 3

100.1 parts of hexahydrophthalic anhydride and 118 parts of 1,6-hexanediol were placed in a reactor equipped with a stirrer, a reflux condenser, a water separator, and a thermometer. The mixture was reacted at 230°C for 6 hours and then diluted with butyl acetate, resulting in a solution of a hydroxyl group-containing polyester resin having a solid content concentration of 80%. The resulting hydroxyl group-containing polyester resin had an acid value of 2 mg KOH/g, a hydroxyl value of 192 mg KOH/g, and a number-average molecular weight of 578.

Production of Hydroxyl Group-Containing Non-aqueous Dispersion-Type Acrylic Resin

Production Example 4

93 parts of heptane and 98 parts of a 55% polymer dispersion stabilizer solution (*1) described below were placed in a four-necked flask equipped with a stirrer, a thermometer, a condenser tube, and a nitrogen gas inlet, and heated to reflux. A mixture of monomer and polymerization initiator described below was added dropwise over 3 hours, followed by aging for 2 hours, resulting in a hydroxyl group-containing non-aqueous dispersion-type acrylic resin.

Mixture of Monomer and Polymerization Initiator

A mixture of 15 parts of styrene, 40 parts of methyl methacrylate, 30 parts of acrylonitrile, 15 parts of 2-hydroxyethyl methacrylate, and 1.5 parts of t-butyl peroxy-2-ethylhexanoate.

The resulting non-aqueous dispersion-type acrylic resin was a dispersion liquid of a milky-white stable low-viscosity polymer having a mass solid content concentration of 53%, a Gardner viscosity of B, and an average particle size (measured by an electron microscope) from 0.2 to 0.3 μm.

Synthesis of Polymer Dispersion Stabilizer Solution (*1)

40 parts of isobutyl acetate and 40 parts of toluene were placed in a four-necked flask equipped with a stirrer, a thermometer, a condenser tube, and a nitrogen gas inlet, and heated to reflux. The following mixture of monomer and polymerization initiator was added dropwise over 3 hours, followed by aging for 2 hours, resulting in a polymer dispersion stabilizer solution.

Mixture of Monomer and Polymerization Initiator

A mixture of 10 parts of styrene, 49 parts of isobutyl methacrylate, 30 parts of 2-ethylhexyl methacrylate, 11 parts of 2-hydroxyethyl methacrylate, and 2 parts of azobisisobutyronitrile.

Production of Coating Compositions

Example 18

5 parts (2 parts of solid content) of the dispersion of acrylic resin-modified silica particles (AB-1) produced in Example 1, 75.4 parts (49 parts of solid content) of the hydroxyl group-containing acrylic resin produced in Production Example 1, 12.5 parts (10 parts of solid content) of the hydroxyl group-containing polyester resin produced in Production Example 3, 3.8 parts (2 parts of solid content) of the hydroxyl group-containing non-aqueous dispersion-type acrylic resin produced in Production Example 4, 39 parts (39 parts of solid content) of "Sumidur N3300" (product name, available from Sumika Covestro Urethane Co., Ltd., isocyanurate ring adduct of hexamethylene diisocyanate, 100% solid content), 1.2 parts (0.3 parts of solid content) of "NACURE 4167" (product name, available from King Industries, Inc., triethylamine salt of alkylphosphoric acid, curing catalyst, 25% active ingredient), 0.5 parts (0.3 parts of solid content) of "SETALUX 61767 VX-60" (product name, available from Allnex, viscosity modifier, 60% solid content), 0.2 parts (0.1 parts of solid content) of "LHP-96" (product name, available from Kusumoto Chemicals, Ltd., surface conditioner, 50% active ingredient), 2 parts (2 parts of solid content) of "TINUVIN 400" (product name, available from BASF, benzotriazole-based UV absorber, 100% active ingredient), and 4 parts (4 parts of solid content) of "HOSTAVIN 3058" (product name, available from CLARIANT, hindered amine-based light stabilizer, acylated hindered amine, 100% active ingredient) were compounded. The mixture was diluted with butyl acetate and stirred to give a solid content of paint of 52%, resulting in coating composition No. 1.

Examples 19 to 46 and Comparative Examples 3 to 6

Coating compositions No. 2 to 33 were produced in the same manner as in Example 18 except that the formulations were changed to those presented in Tables 4 to 8.

(Note 5) to (Note 7) in the tables have the following meanings.

(Note 5) "Desmodur N3900": product name, available from Sumika Covestro Urethane Co., Ltd., a polyisocyanate compound of hexamethylene diisocyanate;
(Note 6) "Cymel 250": product name, available from Allnex Japan Inc., methyl butyl mixed etherified melamine resin;
(Note 7) "Disparlon NSH8430": product name, available from Kusumoto Chemicals, Ltd., silicone-modified acrylic.

Preparation of Coated Sheet for Testing

0.8 mm-thick dull steel sheets having undergone a zinc phosphate chemical conversion treatment were electrodeposition-coated with "Elecron GT-10" (product name, available from Kansai Paint Co., Ltd., thermosetting epoxy resin cationic electrodeposition paint) to give a film thickness of 20 μm, and curing was performed by heating at 170°C for 30 minutes. Then, the cured films were each electrostatically coated with "WP-523H" (product name, available from Kansai Paint Co., Ltd., acrylic/melamine resin-based water-based intermediate coating composition) by a rotary atomizing-type electrostatic coating apparatus to give a cured film thickness of 20 μm, and the resulting products were allowed to stand for 5 minutes to form uncured intermediate coating films. A water-based basecoat "WBC713T" (product name, available from Kansai Paint Co., Ltd., acrylic/melamine resin-based automotive overcoat basecoat paint, black color) was applied to each of the uncured intermediate coating films to give a dried film thickness of 15 μm, allowed to stand at room temperature for 5 minutes, and preheated at 80°C for 5 minutes, resulting in uncured basecoat films. Then, the coating compositions prepared in the above Examples and Comparative Examples were each applied onto each of the uncured basecoat films to give a film thickness of 35 μm, allowed to stand at room temperature for 10 minutes, and cured by heating at 140°C for 30 minutes, resulting in coated sheets for testing. Each of the resulting coated sheets for testing was allowed to stand at room temperature for 7 days and then subjected to the following coating film performance tests. The evaluation results are presented in Table 4 to Table 8 below.

Scratch Resistance

Each of the resulting coated sheets for testing described above was subjected to 10 rubbing strokes by a Gakushin-type rubbing tester (Crock Meter M238BB CM-5, available from SDL ATLAS). The abrasive used in this case was "Wetordry Polishing Sheet 281Q particle size 9 μm" (product name, polishing agent available from 3M). After the test, the coating film surface was air-sprayed, then the 20° gloss before and after the test was measured using a gloss meter (available from Byk-Gardner, device name:micro-TRI-gloss). The gloss retention rate was calculated based on the following formula. S, A and B are acceptable levels.

$$\text{Gloss After Test/Initial Gloss} \times 100$$

S: 85% or greater;
A: 80% or greater and less than 85%;
B: 65% or greater and less than 80%;
C: 50% or greater and less than 65%;
D: less than 50%.

Recoat Adhesion

The water-based basecoat "WBC713T" (product name, available from Kansai Paint Co., Ltd., acrylic/melamine resin-based automotive overcoat basecoat paint, black color) was used again and applied to each of the resulting coated sheets for testing described above to give a film thickness of 15 μm, allowed to stand at room temperature for 5 minutes, and preheated at 80°C for 5 minutes, resulting in uncured basecoat films. Then, each of the coating compositions prepared in the above Examples and Comparative Examples was applied onto each of the uncured basecoat films to give a film thickness of 35 μm, allowed to stand at room temperature for 10 minutes, and cured by heating at 140°C for 30 minutes, resulting in coated sheets for recoat adhesion testing.

The recoat adhesion of each of the resulting coated sheets for recoat adhesion testing was tested by a cross-cut (100 squares of 2 mm × 2 mm in size) cellophane tape peeling test described in JIS K5600, and evaluated based on the following criteria. S, A and B are acceptable levels.

S: The number of remaining squares is 100;
A: The number of remaining squares is from 99 to 90;
B: The number of remaining squares is from 89 to 70;
C: The number of remaining squares is from 69 to 35;
D: The number of remaining squares is 34 or less.

Transparency

The transparency of each of the resulting coated sheets for testing described above was evaluated based on an L* value measured by "CM-512m3" (product name, available by Konica Minolta, Inc., multi-angle spectrophotometer). In this test, the L* value was a sum of three L* values observed when standard light D65 was irradiated from three angles, namely 25° (highlight direction), 45°, and 75° (shade direction), toward a light-receiving angle (with the direction perpendicular to the coating surface considered 0°). A smaller L * value indicates that the black color of the underlying basecoat coating film is more clearly visible, and that the clearcoat coating film formed has higher transparency. S, A and B are acceptable levels.

S: The sum of L* values is less than 1.5;
A: The sum of L* values is 1.5 or greater and less than 2.0;
B: The sum of L* values is 2.0 or greater and less than 2.5;
C: The sum of L* values is 2.5 or greater and less than 3.5;
D: The sum of L* values is 3.5 or greater.

[Table 4]

[Table 4]

| | Examples | | | | | | |
|---|---|---|---|---|---|---|---|
| | 18 | 19 | 20 | 21 | 22 | 23 | 24 |
| Coating Composition No. | 1 | 2 | 3 | 4 | 5 | 6 | 7 |
| Type of Acrylic Resin-Modified Silica Particles | AB-1 | AB-2 | AB-3 | AB-4 | AB-5 | AB-6 | AB-7 |
| Amount of Acrylic Resin-Modified Silica Particles | 2 | 2 | 2 | 2 | 2 | 2 | 2 |

(continued)

| | | Examples | | | | | | |
|---|---|---|---|---|---|---|---|---|
| | | 18 | 19 | 20 | 21 | 22 | 23 | 24 |
| Hydroxyl Group-Containing Resin | Hydroxyl Group-Containing Acrylic Resin | 49 | 49 | 49 | 49 | 49 | 49 | 49 |
| | Acrylic Resin Having a Hydroxyl Group and an Alkoxysilyl Group | | | | | | | |
| | Hydroxyl Group-Containing Polyester Resin | 10 | 10 | 10 | 10 | 10 | 10 | 10 |
| | Hydroxyl Group-Containing Non-aqueous Dispersion-Type Acrylic Resin | 2 | 2 | 2 | 2 | 2 | 2 | 2 |
| | "Sumidur N3300" | 39 | 39 | 39 | 39 | 39 | 39 | 39 |
| Curing Agent | "Desmodur N3900" Note 5 | | | | | | | |
| | "Cymel 250" Note 6 | | | | | | | |
| Catalyst | "NACURE 4167" | 0.3 | 0.3 | 0.3 | 0.3 | 0.3 | 0.3 | 0.3 |
| Viscosity Modifier | "SETALUX 61767 VX-60" | 0.3 | 0.3 | 0.3 | 0.3 | 0.3 | 0.3 | 0.3 |
| Surface Conditioner | "LHP-96" | 0.1 | 0.1 | 0.1 | 0.1 | 0.1 | 0.1 | 0.1 |
| | "NSH8430" Note 7 | | | | | | | |
| Ultraviolet Absorber | "TINUVIN400" | 2 | 2 | 2 | 2 | 2 | 2 | 2 |
| Light Stabilizer | "HOSTAVIN3058" | 4 | 4 | 4 | 4 | 4 | 4 | 4 |
| Evaluation | Scratch Resistance | S | A | A | S | S | A | S |
| | Recoat Adhesion | S | B | S | S | S | S | A |
| | Transparency | S | A | S | S | A | A | A |

[Table 5]

Table 5

| | | Examples | | | | | | |
|---|---|---|---|---|---|---|---|---|
| | | 25 | 26 | 27 | 28 | 29 | 30 | 31 |
| Coating Composition No. | | 8 | 9 | 10 | 11 | 12 | 13 | 14 |
| Type of Acrylic Resin-Modified Silica Particles | | AB-8 | AB-9 | AB-10 | AB-11 | AB-12 | AB-13 | AB-15 |
| Amount of Acrylic Resin-Modified Silica Particles | | 2 | 2 | 2 | 2 | 2 | 2 | 2 |
| Hydroxyl Group-Containing Resin | Hydroxyl Group-Containing Acrylic Resin | 49 | 49 | 49 | 49 | 49 | 49 | 49 |
| | Acrylic Resin Having a Hydroxyl Group and an Alkoxysilyl Group | | | | | | | |
| | Hydroxyl Group-Containing Polyester Resin | 10 | 10 | 10 | 10 | 10 | 10 | 10 |
| | Hydroxyl Group-Containing Non-aqueous Dispersion-Type Acrylic Resin | 2 | 2 | 2 | 2 | 2 | 2 | 2 |

(continued)

| | | Examples | | | | | | |
|---|---|---|---|---|---|---|---|---|
| | | 25 | 26 | 27 | 28 | 29 | 30 | 31 |
| Curing Agent | "Sumidur N3300" | 39 | 39 | 39 | 39 | 39 | 39 | 39 |
| | "Desmodur N3900" Note 5 | | | | | | | |
| | "Cymel 250" Note 6 | | | | | | | |
| Catalyst | "NACURE 4167" | 0.3 | 0.3 | 0.3 | 0.3 | 0.3 | 0.3 | 0.3 |
| Viscosity Modifier | "SETALUX 61767 VX-60" | 0.3 | 0.3 | 0.3 | 0.3 | 0.3 | 0.3 | 0.3 |
| Surface Conditioner | "LHP-96" | 0.1 | 0.1 | 0.1 | 0.1 | 0.1 | 0.1 | 0.1 |
| | "NSH8430" Note 7 | | | | | | | |
| Ultraviolet Absorber | "TINUVIN400" | 2 | 2 | 2 | 2 | 2 | 2 | 2 |
| Light Stabilizer | "HOSTAVIN3058" | 4 | 4 | 4 | 4 | 4 | 4 | 4 |
| Evaluation | Scratch Resistance | S | S | S | A | B | S | S |
| | Recoat Adhesion | A | S | S | S | S | S | B |
| | Transparency | S | S | S | S | S | S | S |

[Table 6]

Table 6

| | | Examples | | | | | | |
|---|---|---|---|---|---|---|---|---|
| | | 32 | 33 | 34 | 35 | 36 | 37 | 38 |
| Coating Composition No. | | 15 | 16 | 17 | 18 | 19 | 20 | 21 |
| Type of Acrylic Resin-Modified Silica Particles | | AB-16 | AB-17 | AB-18 | AB-1 | AB-3 | AB-1 | AB-1 |
| Amount of Acrylic Resin-Modified Silica Particles | | 2 | 2 | 2 | 2 | 2 | | |
| Hydroxyl Group-Containing Resin | Hydroxyl Group-Containing Acrylic Resin | 49 | 49 | 49 | | | 46 | 58 |
| | Acrylic Resin Having a Hydroxyl Group and an Alkoxysilyl Group | | | | 49 | 49 | | |
| | Hydroxyl Group-Containing Polyester Resin | 10 | 10 | 10 | 10 | 10 | 15 | |
| | Hydroxyl Group-Containing Non-aqueous Dispersion-Type Acrylic Resin | 2 | 2 | 2 | 2 | 2 | | 3 |
| Curing Agent | "Sumidur N3300" | 39 | 39 | 39 | 39 | 39 | 39 | 39 |
| | "Desmodur N3900" Note 5 | | | | | | | |
| | "Cymel 250" Note 6 | | | | | | | |
| Catalyst | "NACURE 4167" | 0.3 | 0.3 | 0.3 | 0.3 | 0.3 | 0.3 | 0.3 |
| Viscosity Modifier | "SETALUX 61767 VX-60" | 0.3 | 0.3 | 0.3 | 0.3 | 0.3 | 0.3 | 0.3 |
| Surface Conditioner | "LHP-96" | 0.1 | 0.1 | 0.1 | 0.1 | 0.1 | 0.1 | 0.1 |
| | "NSH8430" Note 7 | | | | | | | |

(continued)

| | | Examples | | | | | | |
|---|---|---|---|---|---|---|---|---|
| | | 32 | 33 | 34 | 35 | 36 | 37 | 38 |
| Ultraviolet Absorber | "TINUVIN400" | 2 | 2 | 2 | 2 | 2 | 2 | 2 |
| Light Stabilizer | "HOSTAVIN3058" | 4 | 4 | 4 | 4 | 4 | 4 | 4 |
| Evaluation | Scratch Resistance | S | S | S | S | S | S | S |
| | Recoat Adhesion | A | S | B | S | S | S | A |
| | Transparency | S | A | S | S | S | S | S |

[Table 7]

Table 7

| | | Examples | | | | | | | |
|---|---|---|---|---|---|---|---|---|---|
| | | 39 | 40 | 41 | 42 | 43 | 44 | 45 | 46 |
| Coating Composition No. | | 22 | 23 | 24 | 25 | 26 | 27 | 28 | 29 |
| Type of Acrylic Resin-Modified Silica Particles | | AB-1 | AB-1 | AB-1 | AB-1 | AB-1 | AB-1 | AB-1 | AB-1 |
| Amount of Acrylic Resin-Modified Silica Particles | | | 2 | 2 | 2 | 1 | 4 | 2 | 2 |
| Hydroxyl Group-Containing Resin | Hydroxyl Group-Containing Acrylic Resin | 61 | 49 | 50 | 61 | 49 | 49 | 49 | 49 |
| | Acrylic Resin Having a Hydroxyl Group and an Alkoxysilyl Group | | | | | | | | |
| | Hydroxyl Group-Containing Polyester Resin | | 10 | 10 | 10 | 10 | 10 | 10 | 10 |
| | Hydroxyl Group-Containing Non-aqueous Dispersion-Type Acrylic Resin | | 2 | 2 | 2 | 2 | 2 | 2 | 2 |
| Curing Agent | "Sumidur N3300" | 39 | 39 | | | 39 | 39 | 39 | 39 |
| | "Desmodur N3900" Note 5 | | | 38 | | | | | |
| | "Cymel 250" Note 6 | | | | 27 | | | | |
| Catalyst | "NACURE 4167" | 0.3 | | 0.3 | 0.3 | 0.3 | 0.3 | 0.3 | 0.3 |
| Viscosity Modifier | "SETALUX 61767 VX-60" | 0.3 | | 0.3 | 0.3 | 0.3 | 0.3 | 0.3 | 0.3 |
| Surface Conditioner | "LHP-96" | 0.1 | 0.1 | 0.1 | 0.1 | 0.1 | 0.1 | | |
| | "NSH8430" Note 7 | | | | | | | 0.1 | |
| Ultraviolet Absorber | "TINUVIN400" | 2 | | 2 | 2 | 2 | 2 | 2 | 2 |
| Light Stabilizer | "HOSTAVIN3058" | 4 | | 4 | 4 | 4 | 4 | 4 | 4 |
| Evaluation | Scratch Resistance | S | A | S | S | S | S | S | S |
| | Recoat Adhesion | A | S | S | S | S | S | S | S |
| | Transparency | S | S | S | S | S | S | S | S |

[Table 8]

Table 8

| | | Comparative Example | | | |
|---|---|---|---|---|---|
| | | 3 | 4 | 5 | 6 |
| Coating Composition No. | | 30 | 31 | 32 | 33 |
| Type of Acrylic Resin-Modified Silica Particles | | AB-14 | AB-14 | AB-19 | |
| Amount of Acrylic Resin-Modified Silica Particles | | 2 | 2 | 2 | |
| Hydroxyl Group-Containing Resin | Hydroxyl Group-Containing Acrylic Resin | 49 | 49 | 49 | 49 |
| | Acrylic Resin Having a Hydroxyl Group and an Alkoxysilyl Group | | | | |
| | Hydroxyl Group-Containing Polyester Resin | 10 | 10 | 10 | 10 |
| | Hydroxyl Group-Containing Non-aqueous Dispersion-Type Acrylic Resin | 2 | 2 | 2 | 2 |
| Curing Agent | "Sumidur N3300" | 39 | 39 | 39 | 39 |
| | "Desmodur N3900" Note 5 | | | | |
| | "Cymel 250" Note 6 | | | | |
| Catalyst | "NACURE 4167" | 0.3 | 0.3 | 0.3 | 0.3 |
| Viscosity Modifier | "SETALUX 61767 VX-60" | 0.3 | 0.3 | 0.3 | 0.3 |
| Surface Conditioner | "LHP-96" | 0.1 | | 0.1 | 0.1 |
| | "NSH8430" Note 7 | | | | |
| Ultraviolet Absorber | "TINUVIN400" | 2 | 2 | 2 | 2 |
| Light Stabilizer | "HOSTAVIN3058" | 4 | 4 | 4 | 4 |
| Evaluation | Scratch Resistance | C | D | S | D |
| | Recoat Adhesion | S | S | D | S |
| | Transparency | S | S | C | S |

Although embodiments and examples of the present invention have been described in detail above, the present invention is not limited to the embodiments described above, and various modifications are possible based on the technical idea of the present invention.

## Claims

**1.** Acrylic resin-modified silica particles comprising:

silica particles (A); and
an acrylic resin (B) bonded to the silica particles (A),
the acrylic resin (B) having
at least one chain selected from the group consisting of a polyoxyalkylene chain and a polyester chain and a polysiloxane structure.

**2.** The acrylic resin-modified silica particles according to claim 1, wherein the silica particles (A) are colloidal silica having an average primary particle size from 5 to 100 nm.

**3.** The acrylic resin-modified silica particles according to claim 1 or 2, wherein the acrylic resin-modified silica particles are a reaction product of

silica particles (a1) bonded to an acrylic resin having a first chemically reactive group, and
a compound (a2) having:

a second chemically reactive group reactable with the first chemically reactive group;
at least one chain selected from the group consisting of a polyoxyalkylene chain and a polyester chain; and
a polysiloxane structure.

**4.** The acrylic resin-modified silica particles according to claim 3,
wherein

the silica particles (a1) bonded to an acrylic resin having a first chemically reactive group are a reaction product of silica particles (a11) having a polymerizable unsaturated group and
a polymerizable unsaturated monomer mixture (a12),
the polymerizable unsaturated monomer mixture (a12) including, as at least a part of components of the polymerizable unsaturated monomer mixture (a12), a polymerizable unsaturated monomer (a121) having a first chemically reactive group.

**5.** The acrylic resin-modified silica particles according to claim 4, wherein the polymerizable unsaturated monomer (a121) having a first chemically reactive group is at least one type of polymerizable unsaturated monomer selected from the group consisting of a carboxyl group-containing polymerizable unsaturated monomer, an epoxy group-containing polymerizable unsaturated monomer, an isocyanate group-containing polymerizable unsaturated monomer, and an amino group-containing polymerizable unsaturated monomer.

**6.** The acrylic resin-modified silica particles according to any one of claims 3 to 5, wherein the compound (a2) having: a second chemically reactive group reactable with the first chemically reactive group; at least one chain selected from the group consisting of a polyoxyalkylene chain and a polyester chain; and a polysiloxane structure; has, as the second chemically reactive group, at least one type of chemically reactive group selected from the group consisting of an epoxy group, a carboxyl group, an amino group, a hydroxyl group, and an isocyanate group.

**7.** The acrylic resin-modified silica particles according to any one of claims 3 to 6, wherein the compound (a2) having: a second chemically reactive group reactable with the first chemically reactive group; at least one chain selected from the group consisting of a polyoxyalkylene chain and a polyester chain; and a polysiloxane structure; has a number-average molecular weight in a range from 200 to 4000.

**8.** The acrylic resin-modified silica particles according to any one of claims 3 to 7, wherein a mass ratio (a1)/(a2) of the silica particles (a1) bonded to an acrylic resin having a first chemically reactive group to the compound (a2) having: a second chemically reactive group reactable with the first chemically reactive group; at least one chain selected from the group consisting of a polyoxyalkylene chain and a polyester chain; and a polysiloxane structure; is in a range from 90/10 to 98/2.

**9.** The acrylic resin-modified silica particles according to any one of claims 1 to 8, wherein the acrylic resin (B) having at least one chain selected from the group consisting of a polyoxyalkylene chain and a polyester chain and having a polysiloxane structure is an acrylic resin (B') further having a hydroxyl group.

**10.** The acrylic resin-modified silica particles according to claim 4,

wherein the acrylic resin (B) having at least one chain selected from the group consisting of a polyoxyalkylene chain and a polyester chain and having a polysiloxane structure is the acrylic resin (B') further having a hydroxyl group, and
an acrylic resin produced from the polymerizable unsaturated monomer mixture (a12) has a hydroxyl value in a range from 60 to 140 mg KOH/g.

**11.** The acrylic resin-modified silica particles according to any one of claims 1 to 10, wherein a mass ratio of the polysiloxane structure to the at least one chain selected from the group consisting of a polyoxyalkylene chain and a polyester chain, expressed as a mass ratio of (polysiloxane structure)/(at least one chain selected from the group consisting of a polyoxyalkylene chain and a polyester chain), is in a range from 65/35 to 5/95.

**12.** A coating composition comprising:

the acrylic resin-modified silica particles according to any one of claims 1 to 11; and
a binder component.

**13.** The coating composition according to claim 12, wherein the binder component includes a hydroxyl group-containing resin and a cross-linking agent.

**14.** A method of forming a multilayer coating film by sequentially applying at least one layer of a colored basecoat paint and at least one layer of a clearcoat paint to an object to be coated, the method comprising applying the coating composition according to claim 12 or 13 as a clearcoat paint at an uppermost layer.

## INTERNATIONAL SEARCH REPORT

International application No. **PCT/JP2021/042489**

**A. CLASSIFICATION OF SUBJECT MATTER**

***C01B 33/18***(2006.01)i; ***C09D 201/00***(2006.01)i; ***C09D 7/62***(2018.01)i
FI: C09D201/00; C09D7/62; C01B33/18

According to International Patent Classification (IPC) or to both national classification and IPC

**B. FIELDS SEARCHED**

Minimum documentation searched (classification system followed by classification symbols)

C01B33/18; C09D201/00; C09D7/62

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

CAplus/REGISTRY (STN); Japio-GPG/FX

**C. DOCUMENTS CONSIDERED TO BE RELEVANT**

| Category* | Citation of document, with indication, where appropriate, of the relevant passages | Relevant to claim No. |
|---|---|---|
| A | WO 2017/051718 A1 (KANSAI PAINT CO LTD) 30 March 2017 (2017-03-30) examples | 1-14 |
| A | WO 2017/056911 A1 (KANSAI PAINT CO LTD) 06 April 2017 (2017-04-06) examples | 1-14 |
| A | WO 2019/237093 A1 (ADAPTIVE SURFACE TECHNOLOGIES, INC.) 12 December 2019 (2019-12-12) claims | 1-14 |
| A | JP 2008-88300 A (MITSUBISHI RAYON CO LTD) 17 April 2008 (2008-04-17) examples | 1-14 |
| A | JP 2018-177844 A (KANSAI PAINT CO LTD) 15 November 2018 (2018-11-15) paragraph [0033], examples | 1-14 |
| A | JP 2004-314468 A (SUMITOMO CHEMICAL CO) 11 November 2004 (2004-11-11) paragraph [0022], examples | 1-14 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **14 January 2022** | **01 February 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

INTERNATIONAL SEARCH REPORT

International application No.
**PCT/JP2021/042489**

**C. DOCUMENTS CONSIDERED TO BE RELEVANT**

| Category* | Citation of document, with indication, where appropriate, of the relevant passages | Relevant to claim No. |
|---|---|---|
| A | JP 2000-297155 A (GOLDSCHMIDT AG) 24 October 2000 (2000-10-24) examples | 1-14 |
| A | JP 2010-144009 A (FUJIFILM CORP) 01 July 2010 (2010-07-01) examples | 1-14 |
| A | JP 11-241047 A (KANSAI PAINT CO LTD) 07 September 1999 (1999-09-07) examples | 1-14 |
| A | JP 2009-541542 A (BYK CHEM GMBH) 26 November 2009 (2009-11-26) examples | 1-14 |
| P, A | WO 2021/131444 A1 (KANSAI PAINT CO LTD) 01 July 2021 (2021-07-01) examples | 1-14 |

Form PCT/ISA/210 (second sheet) (January 2015)

**INTERNATIONAL SEARCH REPORT**
**Information on patent family members**

International application No.
**PCT/JP2021/042489**

| Patent document cited in search report | Publication date (day/month/year) | Patent family member(s) | Publication date (day/month/year) |
|---|---|---|---|
| WO 2017/051718 A1 | 30 March 2017 | US 2018/0265717 A1 claims<br>EP 3354693 A1<br>CA 2998833 A1<br>CN 108026384 A<br>KR 10-2018-0058707 A | |
| WO 2017/056911 A1 | 06 April 2017 | US 2018/0265730 A1 claims<br>EP 3357984 A1<br>CA 2999405 A1<br>CN 108026411 A<br>KR 10-2018-0063047 A | |
| WO 2019/237093 A1 | 12 December 2019 | WO 2020/005840 A1<br>EP 3801446 A1<br>EP 3810616 A1 | |
| JP 2008-88300 A | 17 April 2008 | (Family: none) | |
| JP 2018-177844 A | 15 November 2018 | (Family: none) | |
| JP 2004-314468 A | 11 November 2004 | (Family: none) | |
| JP 2000-297155 A | 24 October 2000 | US 6194596 B1 claims<br>EP 1035153 A2<br>DE 19910975 A<br>CA 2297504 A1 | |
| JP 2010-144009 A | 01 July 2010 | (Family: none) | |
| JP 11-241047 A | 07 September 1999 | (Family: none) | |
| JP 2009-541542 A | 26 November 2009 | US 2010/0240842 A1 claims<br>WO 2008/003470 A1<br>EP 2035487 A1<br>DE 102006031152 A<br>KR 10-2009-0024780 A<br>CN 101484506 A<br>TW 200808874 A | |
| WO 2021/131444 A1 | 01 July 2021 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2013249400 A
- JP 2013053305 A